(19) Europäisches Patentamt / European Patent Office / Office européen des brevets

(11) **EP 4 718 657 A1**

(12) **EUROPEAN PATENT APPLICATION**

(43) Date of publication:
01.04.2026 Bulletin 2026/14

(21) Application number: 25204905.1

(22) Date of filing: 26.09.2025

(51) International Patent Classification (IPC):
*H02J 1/102* (2026.01)  *H02J 7/34* (2006.01)
*H02J 7/94* (2026.01)  *H02J 7/96* (2026.01)
*H02J 1/16* (2026.01)  *H02J 3/32* (2026.01)
*H02J 3/38* (2026.01)  *H02J 7/02* (2016.01)

(52) Cooperative Patent Classification (CPC):
**H02J 1/102; H02J 7/34; H02J 7/94; H02J 7/96;**
H02J 1/16; H02J 3/32; H02J 3/381; H02J 7/02;
H02J 2101/24

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 26.09.2024 CN 202411351998

(71) Applicant: **Xiamen Ampack Technology Limited**
**Xiamen City, Fujian Province, 361000 (CN)**

(72) Inventor: **DING, Jianxing**
**Xiamen City, Fujian Province, China, 361000 (CN)**

(74) Representative: **Icosa**
**83 avenue Denfert-Rochereau**
**75014 Paris (FR)**

(54) **POWER CONVERSION SYSTEM AND POWER DISTRIBUTION METHOD**

(57) A power conversion system includes: a direct current bus (DC-BUS); a power conversion unit, electrically connected to the DC-BUS, where the power conversion unit is configured to be electrically connected to at least two of a direct current power source, a battery module, or an alternating current power source; and a control unit, electrically connected to the power conversion unit. The control unit is configured to perform the following operations: outputting either a first loop control signal or a second loop control signal to the power conversion unit; and/or, outputting either a third loop control signal or a fourth loop control signal to the power conversion unit; and/or, outputting either a fifth loop control signal or a sixth loop control signal to the power conversion unit.

FIG. 1

**Description**

**TECHNICAL FIELD**

This application relates to the technical field of energy storage, and in particular, to a power conversion system and a power distribution method.

**BACKGROUND**

In a power conversion system at present, there are a plurality of sources of energy input and output, and some energy flows bidirectionally, making it necessary to provide appropriate control signals for each part in an actual control process to implement reasonable distribution of energy and avoid overvoltage, undervoltage, and other abnormalities during energy conversion.

In the related art, in order to implement energy distribution and control in the power conversion system, control logic is preset, and the control logic for each part is determined based on an input power and a load power of each part, so as to control energy distribution for each part.

**SUMMARY**

Some embodiments of this application provide a power conversion system and a power distribution method to alleviate the technical problems that a control process incurs hysteresis and failure to respond quickly when a power conversion system relies on software logic to distribute and control energy.

According to a first aspect, an embodiment of this application provides a power conversion system. The power conversion system includes: a direct current bus (DC-BUS); a power conversion unit, electrically connected to the DC-BUS, where the power conversion unit is configured to be electrically connected to at least two of a direct current power source, a battery module, or an alternating current power source; and a control unit, electrically connected to the power conversion unit. The control unit is configured to perform the following operations: outputting either a first loop control signal or a second loop control signal to the power conversion unit; and/or, outputting either a third loop control signal or a fourth loop control signal to the power conversion unit; and/or, outputting either a fifth loop control signal or a sixth loop control signal to the power conversion unit. The first loop control signal is generated based on an output voltage of the direct current power source and a first threshold voltage. The second loop control signal is generated based on a bus voltage of the DC-BUS and a second threshold voltage. The third loop control signal is generated based on a charge current of the power conversion unit and a first target current, or based on a discharge current of the power conversion unit and a second target current. The fourth loop control signal is generated based on either a third threshold voltage or a fourth threshold voltage and the bus voltage of the DC-BUS. The fifth loop control signal is generated based on an extraction current of the power conversion unit and a third target current, or based on the discharge current of the power conversion unit and a fourth target current. The sixth loop control signal is generated based on either a fifth threshold voltage or a sixth threshold voltage and the bus voltage of the DC-BUS.

The control unit generates the loop control signal for each energy inflow or outflow direction, thereby implementing distribution and management of energy input and output between the direct current power source, the battery module, and the alternating current power source. The above implementation does not require an energy management system (EMS) or other software control logic. The control unit in the power conversion system compares the two loop control signals, selects one of the signals, and outputs the selected signal to implement energy management mode switching. Rapid response is implemented based on detected electrical parameters, thereby increasing the dynamic response speed of energy management.

In one or more embodiments of this application, the power conversion unit includes: a first DC-DC converter, disposed between the direct current power source and the DC-BUS, where the control unit is configured to output either the first loop control signal or the second loop control signal to the first DC-DC converter; and/or, a second DC-DC converter, disposed between the battery module and the DC-BUS, where the control unit is configured to output either the third loop control signal or the fourth loop control signal to the second DC-DC converter; and/or, a DC-AC inverter, disposed between the alternating current power source and the DC-BUS, where the control unit is configured to output either the fifth loop control signal or the sixth loop control signal to the DC-AC inverter.

The first DC-DC converter, the second DC-DC converter, and the DC-AC inverter implement energy distribution of the direct current power source, the battery module, and the alternating current power source respectively, and implement energy management on a plurality of paths.

In one or more embodiments of this application, the first DC-DC converter is a unidirectional DC-DC converter. The control unit is configured to generate the first loop control signal based on a difference value between the output voltage of the direct current power source and the first threshold voltage as well as a maximum power loop controller, and generate the second loop control signal based on a difference value between the bus voltage of the DC-BUS and the second threshold voltage as well as a first constant-voltage loop controller. The first threshold voltage is defined as a voltage corresponding to a maximum power point at which the first DC-DC converter operates. The second threshold voltage is defined as a constant voltage setpoint corresponding to a constant voltage mode in which the first DC-DC converter operates. The control unit is further configured to select, from the first loop control signal and the second loop control signal, the one with a smaller signal duty cycle, and output the selected signal to the first DC-DC converter.

The control unit selects, from the two loop control signals, the one with a smaller signal duty cycle, and outputs the selected signal to the first DC-DC converter, and switches the operating mode of the first DC-DC converter based on the bus voltage. In this way, the energy on the DC-BUS is quickly balanced, and the power conversion system exhibits good dynamic response performance and concise control logic.

In one or more embodiments of this application, the second DC-DC converter is a unidirectional DC-DC converter or a bidirectional DC-DC converter. The control unit is configured to: generate, in response to a condition that the second DC-DC converter operates in a charging mode, the third loop control signal based on a difference value between a charge current of the second DC-DC converter and the first target current as well as a first constant-current loop controller, and generate the fourth loop control signal based on a difference value between the bus voltage of the DC-BUS and the third threshold voltage as well as a second constant-voltage loop controller, where the first target current is defined as a constant current setpoint corresponding to a constant-current charging mode in which the second DC-DC converter operates, and the third threshold voltage is defined as a constant voltage setpoint corresponding to a constant-voltage charging mode in which the second DC-DC converter operates; and/or, the control unit is configured to: generate, in response to a condition that the second DC-DC converter operates in a discharging mode, the third loop control signal based on a difference value between a discharge current of the second DC-DC converter and the second target current as well as a second constant-current loop controller, and generate the fourth loop control signal based on a difference value between the bus voltage of the DC-BUS and the fourth threshold voltage as well as a third constant-voltage loop controller, where, the second target current is defined as a constant current setpoint corresponding to a constant-current discharging mode in which the second DC-DC converter operates, and the fourth threshold voltage is defined as a constant voltage setpoint corresponding to a constant-voltage discharging mode in which the second DC-DC converter operates. The control unit is further configured to select, from the third loop control signal and the fourth loop control signal, the one with a smaller signal duty cycle, and output the selected signal to the second DC-DC converter.

The control unit selects, from the two loop control signals, the one with a smaller signal duty cycle, and outputs the selected signal to the second DC-DC converter, and switches the operating mode of the second DC-DC converter based on the bus voltage. In this way, the energy on the DC-BUS can be quickly balanced, and the power conversion system exhibits good dynamic response performance and concise control logic.

In one or more embodiments of this application, the DC-AC inverter includes a unidirectional DC-AC inverter or a bidirectional DC-AC inverter. The unidirectional DC-AC inverter includes an inverter circuit. The bidirectional DC-AC inverter includes an inverter circuit and a power factor correction circuit. The control unit is configured to: generate, in response to a condition that the inverter circuit is in an operating state, the fifth loop control signal based on a difference value between an extraction current of the inverter circuit and the third target current as well as a third constant-current loop controller, and generate the sixth loop control signal based on a difference value between the bus voltage of the DC-BUS and the fifth threshold voltage as well as a fourth constant-voltage loop controller, where, the third target current is defined as a constant current setpoint corresponding to a constant-current extraction mode in which the inverter circuit operates, and the fifth threshold voltage is defined as a constant voltage setpoint corresponding to a constant-voltage extraction mode in which the inverter circuit operates; and/or, the control unit is configured to: generate, in response to a condition that the power factor correction circuit is in an operating state, the fifth loop control signal based on a difference value between a discharge current of the power factor correction circuit and the fourth target current as well as a fourth constant-current loop controller, and generate the sixth loop control signal based on a difference value between the bus voltage of the DC-BUS and the sixth threshold voltage as well as a fifth constant-voltage loop controller, where, the fourth target current is defined as a constant current setpoint corresponding to a constant-current discharging mode in which the power factor correction circuit operates, and the sixth threshold voltage is defined as a constant voltage setpoint corresponding to a constant-voltage discharging mode in which the power factor correction circuit operates. The control unit is further configured to select, from the fifth loop control signal and the sixth loop control signal, the one with a smaller signal duty cycle, and output the selected signal to the inverter circuit or the power factor correction circuit.

The control unit selects, from the two loop control signals, the one with a smaller signal duty cycle, and outputs the selected signal to the DC-AC inverter, and switches the operating mode of the DC-AC inverter based on the bus voltage. In this way, the energy on the DC-BUS can be quickly balanced, and the power conversion system exhibits good dynamic response performance and concise control logic.

In one or more embodiments of this application, a relationship between the second threshold voltage, the third threshold voltage, the fourth threshold voltage, the fifth threshold voltage, and the sixth threshold voltage is: $Upvref\_2 > Ubatref\_2 > Uinvref\_1 = Upfcref\_2 > Ubatref\_1$; or $Upvref\_2 > Ubatref\_2 > Ubatref\_1 > Uinvref\_1 = Upfcref\_2$.

By setting the threshold voltages corresponding to different operating modes in which a corresponding subunit of the power conversion unit operates in each energy inflow or outflow direction, this application can implement distribution and management of energy input and output between the direct current power source, the battery module, and the alternating current power source. In this way, when the energy supplied in an energy supply direction is greater than the energy absorbed in an energy-absorbing direction, a subunit of the power conversion unit in the energy-absorbing direction can operate in a constant current mode, and a subunit in the energy-supplying direction can operate in a constant voltage mode. The energy on the DC-BUS can be balanced within a normal range of the bus voltage, so that the bus voltage is not so high or so low as to trigger a protection action.

According to a second aspect, an embodiment of this application provides a power distribution method. The power distribution method is applied to the power conversion system according to the first aspect. The power distribution method includes: acquiring the output voltage of the direct current power source and the bus voltage of the DC-BUS; calculating a first voltage difference between the first threshold voltage of the direct current power source and the output voltage of the direct current power source, and a second voltage difference between the second threshold voltage and the bus voltage; calculating a first loop control signal corresponding to the first voltage difference based on a control algorithm of a maximum power loop controller; and calculating a second loop control signal corresponding to the second voltage difference based on a control algorithm of a first constant-voltage loop controller; and comparing a signal duty cycle of the first loop control signal and that of the second loop control signal, and selecting, from the first loop control signal and the second loop control signal, the one with a smaller signal duty cycle, and outputting the selected signal to the power conversion unit.

After the first loop control signal and the second loop control signal are generated, the one with a smaller signal duty cycle among the two loop control signals is output to the power conversion unit. When the signal duty cycle of a specified loop control signal is reduced from a level higher than the other loop control signal to a level lower than the other loop control signal, the output can be switched between the loop control signals, thereby switching the operating mode of the power conversion unit to maintain an energy balance in the power conversion system. When the direct current power source supplies energy to the DC-BUS, if the energy supplied is greater than the energy absorbed by another power module from the DC-BUS, then a subunit of the power conversion unit, corresponding to the other power module, operates in a constant current mode, and a subunit of the power conversion unit, corresponding to the direct current power source, operates in a constant voltage mode. When the DC-BUS reaches a threshold voltage corresponding to the constant voltage mode, the energy supplied by the direct current power source keeps consistent with the energy absorbed by other power modules. In this way, the bus voltage of the DC-BUS is stabilized near the threshold voltage, thereby avoiding bus overvoltage caused by excessive energy supplied by the direct current power source. Correspondingly, if the energy supplied by the direct current power source is less than the energy absorbed by another power module from the DC-BUS, then the subunit of the power conversion unit, corresponding to the other power module, operates in a constant voltage mode, and the subunit of the power conversion unit, corresponding to the direct current power source, operates in a maximum power point tracking mode. When the bus voltage of the DC-BUS approaches the threshold voltage corresponding to the subunit that operates in a constant voltage mode, the bus voltage of the DC-BUS can be stabilized near the threshold voltage, thereby avoiding bus undervoltage caused by insufficient energy supplied by the direct current power source. In this way, energy balance can be achieved on the DC-BUS, and bus overvoltage and bus undervoltage can be avoided. In the above process, no software logic operation is required, and the control unit can switch the operating mode by comparing and analyzing the signal duty cycle.

According to a third aspect, an embodiment of this application provides a power distribution method. The power distribution method is applied to the power conversion system according to the first aspect. The power distribution method includes: acquiring a charge current or a discharge current of the battery module and the bus voltage of the DC-BUS; calculating, based on the charge current or the discharge current of the battery module, a current difference value corresponding to a constant current mode in which the second DC-DC converter operates; and calculating, based on the bus voltage, a voltage difference value corresponding to a constant voltage mode in which the second DC-DC converter operates; calculating, based on a control algorithm corresponding to the constant current mode in which the second DC-DC converter operates, a third loop control signal corresponding to the current difference value; and calculating, based on a control algorithm corresponding to the constant voltage mode in which the second DC-DC converter operates, a fourth loop control signal corresponding to the voltage difference value; and comparing a signal duty cycle of the third loop control signal and that of the fourth loop control signal, and selecting, from the third loop control signal and the fourth loop control signal, the one with a smaller signal duty cycle, and outputting the selected signal to the power conversion unit.

After the third loop control signal and the fourth loop control signal are generated, the one with a smaller signal duty cycle among the two loop control signals is output to the power conversion unit. When the signal duty cycle of a specified loop control signal is reduced from a level higher than the other loop control signal to a level lower than the other loop control signal, the output can be switched between the loop control signals, thereby switching the operating mode of the power conversion unit to maintain an energy balance in the power conversion system. Based on the third loop control signal or the fourth loop control signal, the subunit of the power conversion unit, corresponding to the battery module, is enabled to switch between the constant current mode and the constant voltage mode. In this way, when the bus voltage of the DC-BUS approaches the threshold voltage of the subunit that operates in the constant voltage mode, the bus voltage can be kept near the threshold voltage corresponding to the subunit that operates in the constant voltage mode, thereby avoiding bus overvoltage or bus undervoltage. In the above process, no software logic operation is required, and the control unit can switch the operating mode by comparing and analyzing the signal duty cycle.

In one or more embodiments of this application, the calculating, based on the charge current or the discharge current of the battery module, a current difference value corresponding to a constant current mode in which the second DC-DC converter operates, includes: calculating, in response to a condition that the second DC-DC converter operates in a charging mode, a first current difference between the charge current of the battery module and a first target current corresponding to a constant-current charging mode; and/or, calculating, in response to a condition that the second DC-DC converter operates in a discharging mode, a second current difference between the discharge current of the battery module and a second target current corresponding to a constant-current discharging mode. The calculating, based on the bus voltage, a voltage difference value corresponding to a constant voltage mode in which the second DC-DC converter operates, includes: calculating a third voltage difference between the third threshold voltage and the bus voltage in response to a condition that the second DC-DC converter operates in the charging mode; and/or, calculating a fourth voltage difference between the fourth threshold voltage and the bus voltage in response to a condition that the second DC-DC converter operates in the discharging mode.

Based on the confirmed operating mode of the second DC-DC converter, this application calculates the current difference and the voltage difference in the charging mode, or the current difference and the voltage difference in the discharging mode, separately.

In one or more embodiments of this application, the calculating, based on a control algorithm corresponding to the constant current mode in which the second DC-DC converter operates, a third loop control signal corresponding to the current difference value, includes: calculating, in response to a condition that the second DC-DC converter operates in a charging mode, a third loop control signal corresponding to the first current difference based on a control algorithm of a first constant-current loop controller; and/or, calculating, in response to a condition that the second DC-DC converter operates in a discharging mode, a third loop control signal corresponding to the second current difference based on a control algorithm of a second constant-current loop controller. The calculating, based on a control algorithm corresponding to the constant voltage mode in which the second DC-DC converter operates, a fourth loop control signal corresponding to the voltage difference value, includes: calculating, in response to a condition that the second DC-DC converter operates in the charging mode, a fourth loop control signal corresponding to the third voltage difference based on a control algorithm of a second constant-voltage loop controller; and/or, calculating, in response to a condition that the second DC-DC converter operates in the discharging mode, a fourth loop control signal corresponding to the fourth voltage difference based on a control algorithm of a third constant-voltage loop controller.

Based on the confirmed operating mode of the second DC-DC converter and based on the current difference and the voltage difference, this application generates the third loop control signal and the fourth loop control signal by using the corresponding constant-current loop controller and constant-voltage loop controller.

According to a fourth aspect, an embodiment of this application provides a power distribution method. The power distribution method is applied to the power conversion system according to the first aspect. The power distribution method includes: acquiring an extraction current or a discharge current of the alternating current power source and the bus voltage of the DC-BUS; calculating, based on the extraction current or the discharge current of the alternating current power source, a current difference value corresponding to a constant current mode in which the DC-AC inverter operates; calculating, based on the bus voltage, a voltage difference value corresponding to a constant voltage mode in which the DC-AC inverter operates; calculating, based on a control algorithm corresponding to the constant current mode in which the DC-AC inverter operates, a fifth loop control signal corresponding to the current difference value; calculating, based on a control algorithm corresponding to the constant voltage mode in which the DC-AC inverter operates, a sixth loop control signal corresponding to the voltage difference value; and comparing a signal duty cycle of the fifth loop control signal and that of the sixth loop control signal, and selecting, from the fifth loop control signal and the sixth loop control signal, the one with a smaller signal duty cycle, and outputting the selected signal to the power conversion unit.

After the fifth loop control signal and the sixth loop control signal are generated, the one with a smaller signal duty cycle among the two loop control signals is output to the power conversion unit. When the signal duty cycle of a specified loop control signal is reduced from a level higher than the other loop control signal to a level lower than the other loop control signal, the output can be switched between the loop control signals, thereby switching the operating mode of the power conversion unit to maintain an energy balance in the power conversion system. Based on the fifth loop control signal or the sixth loop control signal, the subunit of the power conversion unit, corresponding to the alternating current power source, is enabled to switch between the constant current mode and the constant voltage mode. In this way, when the bus voltage of the DC-BUS approaches the threshold voltage of the subunit that operates in the constant voltage mode, the bus voltage can be kept near the threshold voltage corresponding to the subunit that operates in the constant voltage mode, thereby avoiding bus overvoltage or bus undervoltage. In the above process, no software logic operation is required, and the control unit can switch the operating mode by comparing and analyzing the signal duty cycle.

In one or more embodiments of this application, the calculating, based on the extraction current or the discharge current of the alternating current power source, a current difference value corresponding to a constant current mode in which the DC-AC inverter operates, includes: calculating, in response to a condition that an inverter circuit is in an operating state, a third current difference between the extraction current of the alternating current power source and the third target current corresponding to a constant-current extraction mode; and/or, calculating, in response to a condition that a power factor correction circuit is in an operating state, a fourth current difference between the discharge current of the alternating current power source and the fourth target current corresponding to a constant-current discharging mode. The calculating, based on the bus voltage, a voltage difference value corresponding to a constant voltage mode in which the DC-AC inverter operates, includes: calculating a fifth voltage difference between the fifth threshold voltage and the bus voltage in response to a condition that the inverter circuit is in an operating state; and/or, calculating a sixth voltage difference between the sixth threshold voltage and the bus voltage in response to a condition that the power factor correction circuit is in an operating state.

The current difference and the voltage difference in the power extraction mode or the current difference and the voltage difference in the discharging mode are calculated separately based on the operating state of the inverter circuit and the power factor correction circuit.

In one or more embodiments of this application, the calculating, based on a control algorithm corresponding to the constant current mode in which the DC-AC inverter operates, a fifth loop control signal corresponding to the current difference value, includes: calculating, in response to a condition that the inverter circuit is in an operating state, a fifth loop control signal corresponding to a third current difference based on a control algorithm of a third constant-current loop controller; and/or, calculating, in response to a condition that the power factor correction circuit is in an operating state, a fifth loop control signal corresponding to a fourth current difference based on a control algorithm of a fourth constant-current loop controller. The calculating, based on a control algorithm corresponding to the constant voltage mode in which the DC-AC inverter operates, a sixth loop control signal corresponding to the voltage difference value, includes: calculating, in response to a condition that the inverter circuit is in an operating state, a sixth loop control signal corresponding to a fifth voltage difference based on a control algorithm of a fourth constant-voltage loop controller; and/or, calculating, in response to a condition that the power factor correction circuit is in an operating state, a sixth loop control signal corresponding to a sixth voltage difference based on a control algorithm of a fifth constant-voltage loop controller.

Depending on the operating state of the inverter circuit and the power factor correction circuit, based on the current difference and the voltage difference, this application generates the fifth loop control signal and the sixth loop control signal by using the corresponding constant-current loop controller and constant-voltage loop controller.

In contrast to the prior art, in the power conversion system and the power distribution method provided in embodiments of this application, the power conversion unit is electrically connected to the DC-BUS, and is electrically connected to at least two of the following power units: the direct current power source, the battery module, and the alternating current power source. The control unit outputs either the first loop control signal or the second loop control signal to the power conversion unit; and outputs either the third loop control signal or the fourth loop control signal to the power conversion unit; and outputs either the fifth loop control signal or the sixth loop control signal to the power conversion unit. The control unit can generate the loop control signal for each energy inflow or outflow direction, thereby implementing distribution and management of energy input and output in each direction. In addition, the above implementation does not require an energy management system (EMS) or other software control logic. The control unit in the power conversion system compares the two loop control signals, selects one of the signals, and outputs the selected signal to implement power distribution and management and switch the operating mode of the power conversion unit. Rapid response is implemented based on detected electrical parameters, thereby meeting complex transient change scenarios and increasing the dynamic response speed of energy management.

## BRIEF DESCRIPTION OF DRAWINGS

FIG. 1 is a schematic structural diagram of a power conversion system according to an embodiment of this application;
FIG. 2 is a schematic structural diagram of a power conversion system according to another embodiment of this application;
FIG. 3 is a schematic structural diagram of a power conversion system according to still another embodiment of this application;
FIG. 4 is a schematic structural diagram of a power conversion system according to yet another embodiment of this application;
FIG. 5 is a schematic structural diagram of a power conversion unit according to an embodiment of this application;

FIG. 6 is a schematic structural diagram of a power conversion unit according to another embodiment of this application;

FIG. 7 is a schematic diagram of selection and output of a first loop control signal and a second loop control signal according to an embodiment of this application;

FIG. 8 is a schematic diagram of selection and output of a third loop control signal and a fourth loop control signal of a battery module in a charging mode according to an embodiment of this application;

FIG. 9 is a schematic diagram of selection and output of a third loop control signal and a fourth loop control signal of a battery module in a discharging mode according to an embodiment of this application;

FIG. 10 is a schematic diagram of selection and output of a fifth loop control signal and a sixth loop control signal of an alternating current power source in a power extraction mode according to an embodiment of this application;

FIG. 11 is a schematic diagram of selection and output of a fifth loop control signal and a sixth loop control signal of an alternating current power source in a discharging mode according to an embodiment of this application;

FIG. 12 is a schematic flowchart of a power distribution method according to an embodiment of this application;

FIG. 13 is a schematic flowchart of a power distribution method according to another embodiment of this application;

FIG. 14 is a schematic flowchart of a power distribution method according to still another embodiment of this application; and

FIG. 15 is a schematic structural diagram of an electronic device according to an embodiment of this application.

List of reference signs:

DC-BUS: direct current bus; 10: power conversion unit; 20: direct current power source; 30: battery module; 40: alternating current power source; 50: control unit; 11: first DC-DC converter; 12: second DC-DC converter; 13: DC-AC inverter.

## DETAILED DESCRIPTION

To make the objectives, technical solutions, and advantages of this application clearer, the following describes the technical solutions of this application clearly with reference to exemplary embodiments and accompanying drawings. The following specific embodiments are illustrative rather than restrictive, and are intended to provide a basic understanding of this application but not to identify key or decisive elements of the present invention or to limit the scope of protection.

In the description hereof, a "connection" may be a direct connection, or may be an indirect connection implemented through an intermediary, or may be internal communication between two components. A person of ordinary skill in the art is able to understand the specific meanings of the terms in this application according to specific situations.

Some embodiments of this application provide a power conversion system and a power distribution method. The specific implementation of some embodiments of this application is described in further detail below with reference to drawings.

## Power conversion system

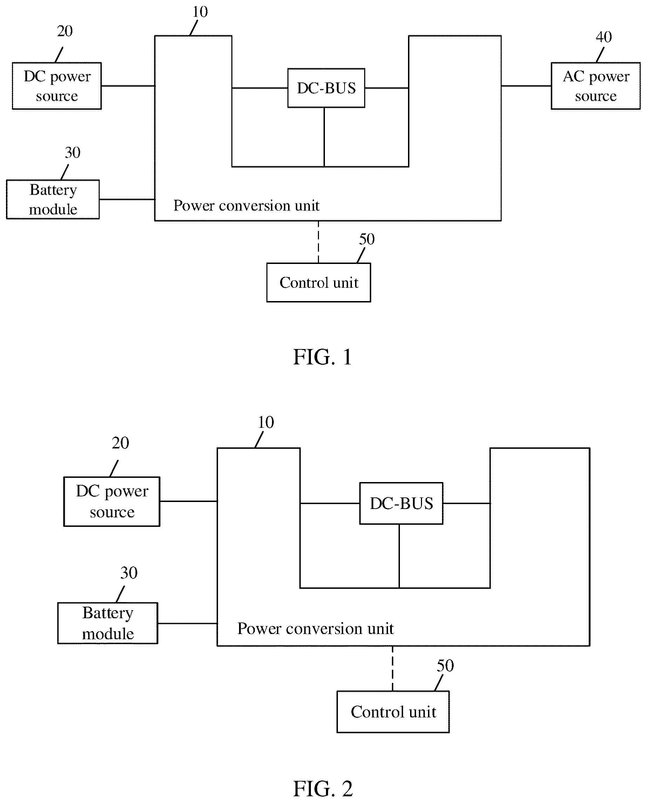

FIG. 1 is a schematic diagram of a modular structure of a power conversion system according to an embodiment of this application. As shown in FIG. 1, the power conversion system includes a direct current bus (DC-BUS), a power conversion unit 10, and a control unit 50.

In some embodiments of this application, an energy storage system includes a power conversion system and at least two of the following components: a direct current power source 20, a battery module 30, or an alternating current power source 40. The power conversion unit 10 is electrically connected to the DC-BUS, and is electrically connected to at least two of the following components: the direct current power source 20, the battery module 30, and the alternating current power source 40. As a specific example of this application, the direct current power source 20 includes a photovoltaic unit, and the alternating current power source 40 includes a mains supply.

The power conversion unit 10 is electrically connected to at least two of: the direct current power source 20, the battery module 30, and the alternating current power source 40. The specific connection manner includes the following scenarios.

Referring to FIG. 1, in a first optional implementation, the power conversion unit 10 is electrically connected to the direct current power source 20, the battery module 30, and the alternating current power source 40 separately. The power conversion system in this implementation implements energy distribution among the direct current power source 20, the battery module 30, and the alternating current power source 40.

Referring to FIG. 2, in a second optional implementation, the power conversion unit 10 is electrically connected to the direct current power source 20 and the battery module 30 separately. The power conversion system in this implementation implements energy distribution among the direct current power source 20 and the battery module 30.

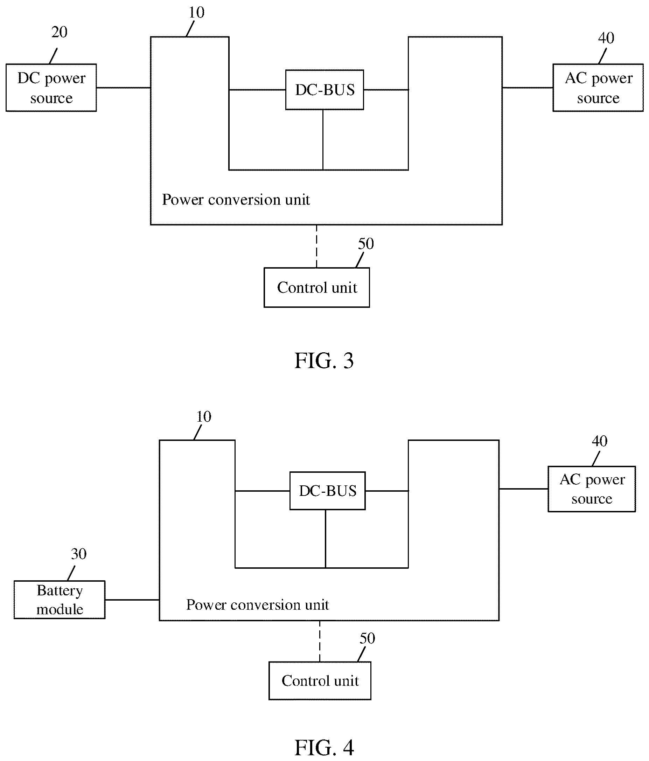

Referring to FIG. 3, in a third optional implementation, the power conversion unit 10 is electrically connected to the direct current power source 20 and the alternating current power source 40 separately. The power conversion system in this implementation implements energy distribution among the direct current power source 20 and the alternating current power source 40.

Referring to FIG. 4, in a fourth optional implementation, the power conversion unit 10 is electrically connected to the battery module 30 and the alternating current power source 40 separately. The power conversion system in this implementation implements energy distribution among the battery module 30 and the alternating current power source 40.

The control unit 50 is electrically connected to the power conversion unit 10, and the control unit 50 outputs a corresponding loop control signal to the power conversion unit 10, so that the power conversion unit 10 operates in different modes to implement energy distribution among the direct current power source 20, the battery module 30, and the alternating current power source 40.

As shown in FIG. 1, in a first optional implementation, the power conversion unit 10 is electrically connected to the direct current power source 20, the battery module 30, and the alternating current power source 40 separately. The control unit 50 outputs either the first loop control signal or the second loop control signal to the power conversion unit 10; and outputs either the third loop control signal or the fourth loop control signal to the power conversion unit 10; and outputs either the fifth loop control signal or the sixth loop control signal to the power conversion unit 10, so as to switch the operating mode of the power conversion unit 10.

As shown in FIG. 2, in a second optional implementation, the power conversion unit 10 is electrically connected to the direct current power source 20 and the battery module 30 separately. The control unit 50 outputs either the first loop control signal or the second loop control signal to the power conversion unit 10; and outputs either the third loop control signal or the fourth loop control signal to the power conversion unit 10, so as to switch the operating mode of the power conversion unit 10.

As shown in FIG. 3, in a third optional implementation, the power conversion unit 10 is electrically connected to the direct current power source 20 and the alternating current power source 40 separately. The control unit 50 outputs either the first loop control signal or the second loop control signal to the power conversion unit 10; and outputs either the fifth loop control signal or the sixth loop control signal to the power conversion unit 10, so as to switch the operating mode of the power conversion unit 10.

As shown in FIG. 4, in a fourth optional implementation, the power conversion unit 10 is electrically connected to the battery module 30 and the alternating current power source 40 separately. The control unit 50 outputs either the third loop control signal or the fourth loop control signal to the power conversion unit 10; and outputs either the fifth loop control signal or the sixth loop control signal to the power conversion unit 10, so as to switch the operating mode of the power conversion unit 10.

The first loop control signal is generated based on an output voltage of the direct current power source 20 and a first threshold voltage.

The second loop control signal is generated based on a bus voltage of the DC-BUS and a second threshold voltage.

The third loop control signal is generated based on a charge current of the power conversion unit 10 and a first target current, or generated based on a discharge current of the power conversion unit 10 and a second target current.

The fourth loop control signal is generated based on a third threshold voltage and the bus voltage of the DC-BUS, or generated based on a fourth threshold voltage and the bus voltage of the DC-BUS.

The fifth loop control signal is generated based on an extraction current of the power conversion unit 10 and a third target current, or generated based on the discharge current of the power conversion unit 10 and a fourth target current.

The sixth loop control signal is generated based on a fifth threshold voltage and the bus voltage of the DC-BUS, or generated based on a sixth threshold voltage and the bus voltage of the DC-BUS.

In some implementations, the power conversion unit 10 includes a plurality of subunits. Each of the subunits is electrically connected to at least two of: the direct current power source 20, the battery module 30, and the alternating current power source 40. Power transmission to and from the DC-BUS is implemented through the plurality of subunits. For example, the power conversion unit 10 includes a first subunit electrically connected to the direct current power source 20. The first subunit implements energy transmission and control between the direct current power source 20 and the DC-BUS. The power conversion unit 10 includes a second subunit electrically connected to the battery module 30. The second subunit implements energy transmission and control between the battery module 30 and the DC-BUS. The power conversion unit 10 includes a third subunit electrically connected to the alternating current power source 40. The third subunit implements energy transmission and control between the alternating current power source 40 and the DC-BUS.

The first loop control signal and the second loop control signal are input to the first subunit. The two loop control signals correspond to two operating modes of the first subunit respectively.

The control unit 50 inputs the first loop control signal to the first subunit. The first subunit operates in an operating mode corresponding to the first loop control signal, and implements energy transmission and control between the direct current power source 20 and the DC-BUS based on the first loop control signal.

The control unit 50 inputs the second loop control signal to the first subunit. The first subunit operates in an operating mode corresponding to the second loop control signal, and implements energy transmission and control between the direct current power source 20 and the DC-BUS based on the second loop control signal.

The third loop control signal and the fourth loop control signal are input to the second subunit. The two loop control signals correspond to two operating modes of the second subunit respectively.

The control unit 50 inputs the third loop control signal to the second subunit. The second subunit operates in an operating mode corresponding to the third loop control signal, and implements energy transmission and control between the battery module 30 and the DC-BUS based on the third loop control signal.

The control unit 50 inputs the fourth loop control signal to the second subunit. The second subunit operates in an operating mode corresponding to the fourth loop control signal, and implements energy transmission and control between the battery module 30 and the DC-BUS based on the fourth loop control signal.

The fifth loop control signal and the sixth loop control signal are input to the third subunit. The two loop control signals correspond to two operating modes of the third subunit respectively.

The control unit 50 inputs the fifth loop control signal to the third subunit. The third subunit operates in an operating mode corresponding to the fifth loop control signal, and implements energy transmission and control between the alternating current power source 40 and the DC-BUS based on the fifth loop control signal.

The control unit 50 inputs the sixth loop control signal to the third subunit. The third subunit operates in an operating mode corresponding to the sixth loop control signal, and implements energy transmission and control between the alternating current power source 40 and the DC-BUS based on the fifth loop control signal.

In implementations corresponding to the four connection relationships of the power conversion unit 10 to the direct current power source 20, the battery module 30, and the alternating current power source 40 separately, the loop control signal output by the control unit 50 is generated based on the corresponding implementation.

In some implementations of this application, the first loop control signal is generated based on an output voltage of the direct current power source 20 and a first threshold voltage. The first loop control signal controls the power conversion unit 10 to adjust the output voltage of the direct current power source 20 by using the first threshold voltage as a target voltage. In other words, the first loop control signal causes the first subunit of the power conversion unit 10 to operate in an operating mode in which the output voltage of the direct current power source 20 is kept at the first threshold voltage. In this case, an input voltage of the first DC-DC converter is kept at the first threshold voltage, that is, the output voltage of the direct current power source 20. Understandably, the output voltage of the direct current power source 20 is the input voltage of the first subunit. In some implementations of this application, the first subunit is the first DC-DC converter 11.

The second loop control signal is generated based on a bus voltage of the DC-BUS and a second threshold voltage. The second loop control signal controls the power conversion unit 10 to adjust the bus voltage of the DC-BUS by using the second threshold voltage as a target voltage. In other words, the second loop control signal causes the first subunit to operate in an operating mode in which the bus voltage of the DC-BUS is kept at the second threshold voltage.

The control unit 50 outputs either the first loop control signal or the second loop control signal to the power conversion unit 10. In this way, when the power conversion unit 10 is connected to the direct current power source 20, the first subunit operates in an operating mode in which the output voltage of the direct current power source 20 is kept at the first threshold voltage, or the first subunit operates in an operating mode in which the bus voltage of the DC-BUS is kept at the second threshold voltage.

That the output voltage of the direct current power source 20 is kept at the first threshold voltage means that the power conversion unit 10 adjusts the output voltage of the direct current power source 20 so that the output voltage is close to or equal to the first threshold voltage. That the bus voltage of the DC-BUS is kept at the second threshold voltage means that the power conversion unit 10 adjusts the output voltage of the direct current power source 20 so that the bus voltage of the DC-BUS is close to or equal to the second threshold voltage.

In some implementations of this application, the third loop control signal is generated based on a charge current of the second subunit and a first target current, or generated based on a discharge current of the second subunit and a second target current.

During charging of the battery module 30, that is, when the second subunit operates in a charging mode, a first current sensor detects a charge current of the second subunit, and the third loop control signal controls the second subunit to adjust the charge current of the second subunit based on the first target current. In other words, during charging of the battery module 30, the third loop control signal causes the second subunit to operate in an operating mode in which the charge current of the second subunit is kept at the first target current. Understandably, the charge current of the second subunit is a current at which the battery module is charged.

During discharging of the battery module 30, that is, when the second subunit operates in a discharging mode, the first current sensor detects a discharge current of the second subunit, and the third loop control signal controls the second subunit to adjust the discharge current of the second subunit based on the second target current. In other words, during discharging of the battery module 30, the third loop control signal causes the second subunit to operate in an operating mode in which the discharge current of the second subunit is kept at the second target current.

The fourth loop control signal is generated based on the bus voltage of the DC-BUS and a third threshold voltage, or generated based on the bus voltage of the DC-BUS and a fourth threshold voltage.

During charging of the battery module 30, that is, when the second subunit operates in a charging mode, the fourth loop control signal controls the second subunit to adjust the bus voltage of the DC-BUS based on the third threshold voltage. In other words, during charging of the battery module 30, the fourth loop control signal causes the second subunit to operate in an operating mode in which the bus voltage of the DC-BUS is kept at the third threshold voltage.

During discharging of the battery module 30, that is, when the second subunit operates in a discharging mode, the fourth loop control signal controls the second subunit to adjust the bus voltage of the DC-BUS based on the fourth threshold voltage. In other words, during discharging of the battery module 30, the fourth loop control signal causes the second subunit to operate in an operating mode in which the bus voltage of the DC-BUS is kept at the fourth threshold voltage.

In the above implementation, when the control unit 50 outputs the third loop control signal to the second subunit, the second subunit is caused to operate in a constant current mode. The constant current mode corresponds to the first target current or the second target current depending on whether the battery module 30 is in a charging state or a discharging state. When the control unit 50 outputs the fourth loop control signal to the second subunit, the second subunit is caused to operate in a constant voltage mode. The constant voltage mode corresponds to the third threshold voltage or the fourth threshold voltage depending on whether the battery module 30 is in a charging state or a discharging state.

In some implementations of this application, the fifth loop control signal is generated based on an extraction current of a third subunit and a third target current, or generated based on a discharge current of the third subunit and a fourth target current.

When the third subunit is in the power extraction mode and obtains energy from the DC-BUS, a second current sensor detects the extraction current of the third subunit. The fifth loop control signal controls the third subunit to adjust the extraction current of the third subunit based on the third target current. In other words, during power extraction by the third subunit, the fifth loop control signal causes the third subunit to operate in an operating mode in which the extraction current of the third subunit is kept at the third target current.

When the third subunit is in a discharging mode and supplies energy to the DC-BUS, the second current sensor detects a discharge current of the third subunit. The fifth loop control signal controls the third subunit to adjust the discharge current of the third subunit based on the fourth target current. In other words, during discharging of the third subunit, the fifth loop control signal causes the third subunit to operate in an operating mode in which the discharge current of the third subunit is kept at the fourth target current.

The sixth loop control signal is generated based on the bus voltage of the DC-BUS and a fifth threshold voltage, or generated based on the bus voltage of the DC-BUS and a sixth threshold voltage.

When the third subunit is in a power extraction mode and obtains energy from the DC-BUS, the sixth loop control signal controls the third subunit to adjust the bus voltage of the DC-BUS based on the fifth threshold voltage. In other words, during power extraction by the third subunit, the sixth loop control signal causes the third subunit to operate in an operating mode in which the bus voltage of the DC-BUS is kept at the fifth threshold voltage.

When the third subunit is in a discharging mode and supplies energy to the DC-BUS, the sixth loop control signal controls the third subunit to adjust the bus voltage of the DC-BUS based on the sixth threshold voltage. In other words, during discharging of the third subunit, the sixth loop control signal causes the third subunit to operate in an operating mode in which the bus voltage of the DC-BUS is kept at the sixth threshold voltage.

In the above implementation, when the control unit 50 outputs the fifth loop control signal to the third subunit, the third subunit is caused to operate in a constant current mode. The constant current mode corresponds to the third target current or the fourth target current depending on whether the third subunit is in a power extraction state or a discharging state. When the control unit 50 outputs the sixth loop control signal to the third subunit, the third subunit is caused to operate in a constant voltage mode. The constant voltage mode corresponds to the fifth threshold voltage or the sixth threshold voltage depending on whether the third subunit is in a power extraction state or a discharging state.

In some embodiments of this application, the power conversion unit 10 is electrically connected to the DC-BUS, and is electrically connected to at least two of the following components: the direct current power source 20, the battery module 30, and the alternating current power source 40. When the power conversion unit 10 is electrically connected to the direct current power source 20, the control unit 50 outputs either the first loop control signal or the second loop control signal to the power conversion unit 10. In this way, the power conversion unit 10 keeps the output voltage of the direct current power source 20 at the first threshold voltage, or keeps the bus voltage of the DC-BUS at the second threshold voltage. When the power conversion unit 10 is connected to the battery module 30, the control unit 50 outputs either the third loop control signal or the fourth loop control signal to the power conversion unit 10. In this way, the power conversion unit 10 operates in a constant current state or keeps the bus voltage of the DC-BUS at a constant voltage state. When the power conversion unit 10 is connected to the alternating current power source 40, the control unit 50 outputs either the fifth loop control signal or the sixth loop control signal to the power conversion unit 10. In this way, the power conversion unit 10 keeps a constant current state, or keeps the bus voltage of the DC-BUS at a constant voltage state. The control unit 50 generates the loop control signal for each energy inflow or outflow direction, thereby implementing distribution and management of energy input and output in each direction. In addition, the above implementation does not require an energy management system (EMS) or other software control logic. The control unit 50 in the power conversion system compares the two loop control signals, selects one of the signals, and outputs the selected signal to implement energy distribution. Rapid response is implemented based on detected electrical parameters, thereby meeting complex transient change scenarios and increasing the dynamic response speed of energy management.

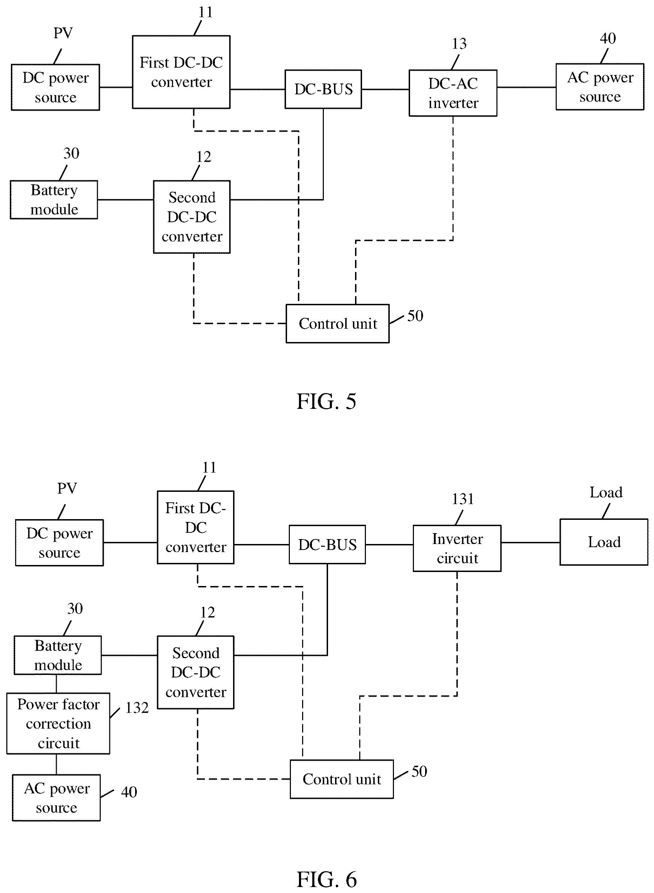

Referring to FIG. 5, according to some embodiments of this application, the power conversion unit 10 includes at least two of: a first DC-DC converter 11, a second DC-DC converter 12, and a DC-AC inverter 13. As a specific example of this application, the first subunit includes the first DC-DC converter 11, the second subunit includes the second DC-DC converter 12, and the third subunit includes the DC-AC inverter 13.

The specific types of components included in the power conversion unit 10 depend on the connection relationships between the power conversion unit 10 and the direct current power source 20, the battery module 30, and the alternating current power source 40. For example, the power conversion unit 10 is connected to the direct current power source 20, and the power conversion unit 10 includes a first DC-DC converter 11; the power conversion unit 10 is connected to the battery module 30, and the power conversion unit 10 includes a second DC-DC converter 12; the power conversion unit 10 is connected to the alternating current power source 40, and the power conversion unit 10 includes a DC-AC inverter. The power conversion unit 10 is connected to at least two of the direct current power source 20, the battery module 30, and the alternating current power source 40. Correspondingly, the power conversion unit 10 includes at least two of the first DC-DC converter 11, the second DC-DC converter 12, and the DC-AC inverter 13.

As shown in FIG. 1, the first DC-DC converter 11 is disposed between the direct current power source 20 and the DC-BUS, and is electrically connected to the direct current power source 20 and the DC-BUS separately. The control unit 50 outputs either the first loop control signal or the second loop control signal to the first DC-DC converter 11.

The second DC-DC converter 12 is disposed between the battery module 30 and the DC-BUS, and is electrically connected to the battery module 30 and the DC-BUS separately. The control unit 50 outputs either the third loop control signal or the fourth loop control signal to the second DC-DC converter 12.

The DC-AC inverter 13 is disposed between the alternating current power source 40 and the DC-BUS, and is electrically connected to the alternating current power source 40 and the DC-BUS separately. The control unit 50 is outputs either the fifth loop control signal or the sixth loop control signal to the DC-AC inverter 13.

In this embodiment, the first DC-DC converter 11 adjusts the output voltage of the direct current power source 20 or the bus voltage of the DC-BUS, keeps the output voltage of the direct current power source 20 at the first threshold voltage when receiving the first loop control signal, and keeps the bus voltage of the DC-BUS at the second threshold voltage when receiving the second loop control signal. The second DC-DC converter 12 adjusts the current between the battery module 30 and the DC-BUS or adjust the bus voltage of the DC-BUS, keeps the current between the battery module 30 and the DC-BUS at a constant current when receiving the third loop control signal, and keeps the bus voltage of the DC-BUS at a constant voltage when receiving the fourth loop control signal. The DC-AC inverter 13 adjusts the current between the alternating current power source 40 and the DC-BUS or adjusts the bus voltage of the DC-BUS, keeps the current between the alternating current power source 40 and the DC-BUS at a constant current when receiving the fifth loop control signal, and keeps the bus voltage of the DC-BUS at a constant voltage when receiving the sixth loop control signal.

According to some embodiments of this application, the first DC-DC converter 11 is a unidirectional DC-DC converter. The voltage output by the direct current power source 20 is output to the DC-BUS through the first DC-DC converter 11.

The control unit 50 generates the first loop control signal based on the output voltage of the direct current power source 20, the first threshold voltage, and a maximum power loop controller, and generates the second loop control signal based on the bus voltage of the DC-BUS, the second threshold voltage, and a first constant-voltage loop controller.

In some embodiments of this application, the first threshold voltage is a voltage corresponding to a maximum power point of the direct current power source 20. In an example in which the direct current power source 20 is a photovoltaic module, the first threshold voltage is a maximum power point tracking (MPPT) voltage of the photovoltaic module, which is calculated by using an MPPT algorithm. The second threshold voltage is a constant voltage setpoint corresponding to a constant voltage mode in which the first DC-DC converter 11 operates.

The output voltage of the direct current power source 20 means a voltage received by the first DC-DC converter 11. The output voltage is acquired by a voltage sampling circuit formed by an operational amplifier, a voltage divider resistor, and a control unit 50. The control unit 50 is configured to sample a current signal and a voltage signal that are required for use in each of the following embodiments. As a specific example of this application, the control unit 50 is a digital signal processor (DSP).

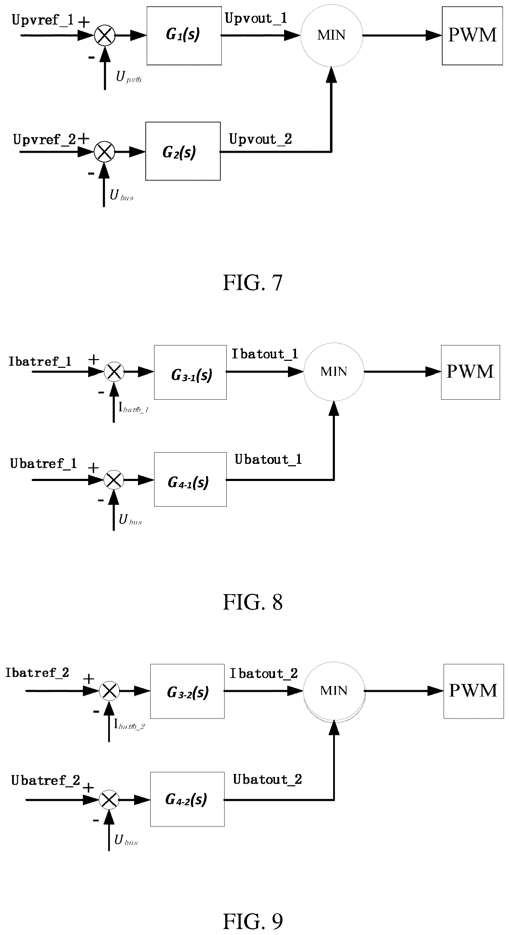

Referring to FIG. 7, the first loop control signal Upvout_1 is generated in the following manner: The control unit 50 samples an output voltage Upvfb of the direct current power source 20, and then inputs the output voltage and a preset first threshold voltage Upvref_1 into a maximum power loop controller $G_1(S)$. The maximum power loop controller $G_1(S)$ calculates a first loop control signal Upvout_1 through an internal control loop based on a difference between the first threshold voltage Upvref_1 and the output voltage Upvfb of the direct current power source 20, and outputs the first loop control signal Upvout_1 to the first DC-DC converter 11. The first DC-DC converter 11 keeps the output voltage Upvfb of the direct current power source 20 at the first threshold voltage Upvref_1.

The second loop control signal Upvout_2 is generated in the following manner: The control unit 50 obtains a bus voltage Ubus of the DC-BUS by sampling, and then inputs the bus voltage Ubus and a preset second threshold voltage Upvref_2 into a first constant-voltage loop controller $G_2(S)$. The first constant-voltage loop controller $G_2(S)$ calculates a second loop control signal Upvout_2 through an internal control loop based on a difference between the second threshold voltage Upvref_2 and the bus voltage Ubus, and outputs the second loop control signal Upvout_2 to the first DC-DC converter 11. The first DC-DC converter 11 keeps the bus voltage Ubus of the DC-BUS at the second threshold voltage Upvref_2.

After generating the first loop control signal Upvout_1 and the second loop control signal Upvout_2, the control unit 50 selects the one with a smaller signal duty cycle among the two loop control signals, and outputs the selected PWM signal to the first DC-DC converter 11.

In some embodiments of this application, the control unit 50 generates the first loop control signal Upvout_1 and the second loop control signal Upvout_2 in real time. The operating mode of the first DC-DC converter 11 is switched immediately when the control unit 50 switches the output loop control signal based on the signal duty cycle. For example, the first loop control signal Upvout_1 is switched to the second loop control signal Upvout_2, and therefore, the first DC-DC converter switches from an operating mode that keeps the direct current power source 20 outputting a stable voltage to an operating mode that keeps the DC-BUS at the second threshold voltage Upvref_2.

In some embodiments of this application in which a direct current power source 20 is included, the direct current power source 20 supplies energy to the DC-BUS. Because the power conversion unit 10 is also connected to at least one of the battery module 30 or the alternating current power source 40, the battery module 30, when being charged, receives energy from the DC-BUS supplied by the direct current power source 20. The alternating current power source 40 is a mains supply power grid. The power grid receives energy from the DC-BUS supplied by the direct current power source 20.

When the energy supplied by the direct current power source 20 is completely absorbed by the battery module 30 and/or the alternating current power source 40, the direct current power source 20 continues to operate in a maximum power point tracking (MPPT) mode. At this time, the first loop control signal Upvout_1 generated by the control unit 50 keeps the output voltage Upvfb of the direct current power source 20 at the first threshold voltage Upvref_1, the second DC-DC converter 12 and/or the DC-AC inverter operates in a constant voltage mode, and the battery module 30 and/or the alternating current power source 40 stably absorbs the energy supplied by the direct current power source 20 to the DC-BUS.

In an example in which the alternating current power source 40 absorbs the energy of the DC-BUS, the energy supplied by the direct current power source 20 is completely absorbed, and the DC-AC inverter operates in the constant voltage mode. At this time, the bus voltage Ubus of the DC-BUS is stabilized at the fifth threshold voltage Uinvref_1 corresponding to the power extraction state in which the DC-AC inverter operates. When the bus voltage Ubus is kept at the fifth threshold voltage Uinvref_1, the second threshold voltage Upvref_2 is greater than the fifth threshold voltage Uinvref_1, and a difference between the bus voltage Ubus received by the first constant-voltage loop controller $G_2(S)$ and the second threshold voltage Upvref_2 is large. At this time, the first constant-voltage loop controller $G_2(S)$ calculates a second loop control signal Upvout_2 through an internal control loop based on the large difference, and a signal duty cycle of the second loop control signal is greater than that of the first loop control signal Upvout_1. The control unit 50 selects the first loop control signal Upvout_1 with a smaller signal duty cycle, and outputs the selected signal to the first DC-DC converter 11. In some embodiments of this application, the second threshold voltage Upvref_2 is 20 V greater than the fifth threshold voltage Uinvref_1. In other embodiments of this application, the second threshold voltage Upvref_2 is greater than the fifth threshold voltage Uinvref_1 by any one of 10 V, 15 V, 25 V, or 35 V, or any value falling within [10 V, 35 V].

In some embodiments of this application, when the battery module 30 completely absorbs the energy supplied by the direct current power source 20, the second DC-DC converter 12 operates in a constant-voltage charging mode. At this time, the bus voltage Ubus of the DC-BUS is stabilized at the third threshold voltage Ubatref_1 corresponding to the constant-voltage charging mode in which the second DC-DC converter 12 operates. The third threshold voltage Ubatref_1 is less than the fifth threshold voltage Uinvref_1. At this time, a difference between the second threshold voltage Upvref_2 received by the first constant-voltage loop controller $G_2(S)$ and the bus voltage Ubus is large, and the signal duty cycle of the generated second loop control signal Upvout_2 is greater than that of the first loop control signal Upvout_1. The control unit 50 selects the first loop control signal Upvout_1 with a smaller signal duty cycle, and outputs the selected signal to the first DC-DC converter 11. In some embodiments of this application, the fifth threshold voltage Uinvref_1 is 10 V greater than the third threshold voltage Ubatref_1. In other embodiments of this application, the fifth threshold voltage Uinvref_1 is greater than the third threshold voltage Ubatref_1 by any one of 5 V, 8 V, or 15 V, or any value falling within [5 V, 15 V].

When the energy supplied by the direct current power source 20 is not completely absorbable by the battery module 30 and/or the alternating current power source 40, the excess energy elevates the bus voltage Ubus of the DC-BUS. The first constant-voltage loop controller $G_2(S)$ keeps operating. Therefore, when the bus voltage Ubus of the DC-BUS is elevated, the difference between the bus voltage and the second threshold voltage Upvref_2 is reduced. In this way, the signal duty cycle of the second loop control signal Upvout_2 output by the first constant-voltage loop controller $G_2(S)$ is also reduced. When the bus voltage Ubus is elevated to a value close to or equal to the second threshold voltage Upvref_2, the signal duty cycle of the second loop control signal Upvout_2 is less than the signal duty cycle of the first loop control signal Upvout_1. At this time, the control unit 50 selects a control signal with a smaller signal duty cycle, and outputs the second loop control signal Upvout_2 instead of the first loop control signal Upvout_1 to the first DC-DC converter 11. Under the control of the second loop control signal, the first DC-DC converter 11 keeps the bus voltage Ubus of the DC-BUS at the second threshold voltage Upvref_2. The first DC-DC converter 11 operates in a constant voltage mode, thereby being able to accurately determine a generated power of the direct current power source 20, and improving the precision of the generated power of the direct-current power source.

In this embodiment, in a process of energy supply by the direct current power source 20, the control unit 50 generates a first loop control signal Upvout_1 based on the output voltage Upvfb of the direct current power source 20, and generates a second loop control signal Upvout_2 based on the bus voltage Ubus of the DC-BUS. When the battery module 30 or the alternating current power source 40 is unable to completely absorb the energy supplied by the direct current power source 20, the bus voltage Ubus gradually increases. Consequently, the signal duty cycle of the second loop control signal Upvout_2 gradually decreases. When the signal duty cycle of the second loop control signal Upvout_2 is reduced to such a level that is less than the signal duty cycle of the first loop control signal Upvout_1, the first DC-DC converter 11 receives the second loop control signal Upvout_2, and the first DC-DC converter 11 switches from a maximum power point tracking mode to a constant voltage mode.

In the constant voltage mode, the energy supplied by the direct current power source 20 is equal to the energy absorbed by the battery module 30 and/or the alternating current power source 40, so that the bus voltage Ubus can be stably maintained at the second threshold voltage Upvref_2.

When the first DC-DC converter 11 operates in the constant voltage mode, if the energy absorbed by the battery module 30 and/or the alternating current power source 40 is greater than the energy available from the direct current power source 20, the bus voltage Ubus will be gradually lowered. Consequently, the signal duty cycle of the second loop control signal Upvout_2 will gradually increase. The control unit 50 will output the first loop control signal Upvout_1 instead of the second loop control signal Upvout_2, so that the first DC-DC converter 11 switches from the constant voltage mode to the maximum power point tracking mode.

Referring to FIG. 5, according to some embodiments of this application, the second DC-DC converter 12 is a unidirectional DC-DC converter or a bidirectional DC-DC converter.

When the second DC-DC converter 12 is a unidirectional DC-DC converter, if an input end of the unidirectional DC-DC converter is connected to the battery module 30 and an output end thereof is connected to the DC-BUS, the battery module 30 discharges to output energy. If the input end of the unidirectional DC-DC converter is connected to the DC-BUS and the output end thereof is connected to the battery module 30, the battery module 30 is charged to absorb energy.

When the second DC-DC converter 12 is a bidirectional DC-DC converter, operation modes of the battery module 30 include a charging mode and a discharging mode.

Referring to FIG. 8, when the second DC-DC converter 12 operates in a charging mode, that is, when the battery module is being charged, the control unit 50 generates a third loop control signal Ibatout_1 based on a charge current (Ibatfb_1) of the second DC-DC converter 12, the first target current Ibatref_1, and a first constant-current loop controller $G_{3-1}(S)$, and generates a fourth loop control signal Ubatout_1 based on the bus voltage Ubus of the DC-BUS, the third threshold voltage Ubatref_1, and a second constant-voltage loop controller $G_{4-1}(S)$.

The first target current Ibatref_1 is defined as a charge current corresponding to a constant-current charging mode in which the second DC-DC converter 12 operates, and the third threshold voltage Ubatref_1 is defined as a constant voltage setpoint corresponding to a constant-voltage charging mode in which the second DC-DC converter 12 operates.

The third loop control signal Ibatout_1 is generated in the following manner: The control unit 50 obtains a charge current Ibatfb_1 by sampling through a first current sensor (not shown in the figure), and inputs the charge current Ibatfb_1 and a first target current Ibatref_1 into a first constant-current loop controller $G_{3-1}(S)$. The first constant-current loop controller $G_{3-1}(S)$ calculates a third loop control signal Ibatout_1 through an internal control loop based on a difference between the first target current Ibatref_1 and the charge current Ibatfb_1, and outputs the third loop control signal Ibatout_1 to the second DC-DC converter 12, so that the second DC-DC converter 12 keeps the charge current Ibatfb_1 at the first target current Ibatref_1, that is, the second DC-DC converter 12 operates in a constant-current charging mode.

The fourth loop control signal Ubatout_1 is generated in the following manner: A voltage sampling circuit formed of an operational amplifier, a voltage divider resistor, and a control unit 50 obtains a bus voltage Ubus of the DC-BUS by sampling, and then inputs the bus voltage Ubus and a third threshold voltage Ubatref_1 into a second constant-voltage loop controller $G_{4-1}(S)$. The second constant-voltage loop controller $G_{4-1}(S)$ calculates a fourth loop control signal Ubatout_1 through an internal control loop based on a difference between the third threshold voltage Ubatref_1 and the bus voltage Ubus, and outputs the fourth loop control signal Ubatout_1 to the second DC-DC converter 12, so that the second DC-DC converter 12 keeps the bus voltage Ubus of the DC-BUS at the third threshold voltage Ubatref_1, that is, the second DC-DC converter 12 operates in a constant-voltage charging mode.

After generating the third loop control signal Ibatout_1 and the fourth loop control signal Ubatout_1, the control unit 50 selects the one with a smaller signal duty cycle among the two loop control signals, and outputs the selected signal to the second DC-DC converter 12.

In the above embodiment, if the second DC-DC converter 12 operates in the charging mode, the second DC-DC converter 12 is a bidirectional DC-DC converter, or is a unidirectional DC-DC converter with an output end connected to the battery module 30.

In the above embodiment, when the second DC-DC converter 12 operates in the charging mode, the battery module 30 receives energy from the DC-BUS. When the energy supplied by the direct current power source 20 and/or the alternating current power source 40 to the DC-BUS is greater than the energy absorbed by the battery module 30, the bus voltage Ubus will be elevated. In this case, the difference between the bus voltage Ubus and the third threshold voltage Ubatref_1 is large, and the signal duty cycle of the fourth loop control signal Ubatout_1 is large. The control unit 50 selects and outputs the third loop control signal Ibatout_1 to the second DC-DC converter 12, so that the second DC-DC converter 12 operates in the constant-current charging mode.

When the energy supplied by the direct current power source 20 and/or the alternating current power source 40 to the DC-BUS is less than the energy absorbed by the battery module 30, the bus voltage Ubus of the DC-BUS gradually decreases. With the decrease of the bus voltage Ubus, the difference between the bus voltage Ubus and the third threshold voltage Ubatref_1 also gradually decreases. When the bus voltage Ubus is decreased to a value close to or equal to the third threshold voltage Ubatref_1, the signal duty cycle of the fourth loop control signal Ubatout_1 is less than the signal duty cycle of the third loop control signal Ibatout_1. The control unit 50 selects and outputs the fourth loop control signal Ubatout_1 to the second DC-DC converter 12. The signal received by the second DC-DC converter 12 is switched to the fourth loop control signal Ubatout_1. At this time, the operating mode of the second DC-DC converter 12 is switched from the constant-current charging mode to the constant-voltage charging mode.

If the energy supplied by the direct current power source 20 and/or the alternating current power source 40 to the DC-BUS gradually increases and is greater than the energy absorbed by the battery module 30, the bus voltage Ubus of the DC-BUS gradually increases, and the signal duty cycle of the fourth loop control signal Ubatout_1 also gradually increases. In this way, the signal received by the second DC-DC converter 12 is switched to the third loop control signal Ibatout_1, and the operating mode of the second DC-DC converter 12 is switched from the constant-voltage charging mode to the constant-current charging mode.

Referring to FIG. 9, when the second DC-DC converter 12 operates in a discharging mode, the battery module 30 supplies energy to the DC-BUS. The control unit 50 generates a third loop control signal Ibatout_2 based on a discharge current Ibatfb_2, a second target current Ibatref_2, and a second constant-current loop controller $G_{3\text{-}2}(S)$, and generates a fourth loop control signal Ubatout_2 based on the bus voltage Ubus of the DC-BUS, the fourth threshold voltage Ubatref_2, and a third constant-voltage loop controller $G_{4\text{-}2}(S)$.

The second target current Ibatref_2 is a current corresponding to a constant-current discharging mode in which the second DC-DC converter 12 operates, and the fourth threshold voltage Ubatref_2 is a constant voltage setpoint corresponding to a constant-voltage discharging mode in which the second DC-DC converter 12 operates.

The third loop control signal Ibatout_2 is generated in the following manner: The control unit 50 obtains a discharge current Ibatfb_2 by sampling through a first current sensor, and inputs the discharge current Ibatfb_2 and a second target current Ibatref_2 into a second constant-current loop controller $G_{3\text{-}2}(S)$. The second constant-current loop controller $G_{3\text{-}2}(S)$ calculates a third loop control signal Ibatout_2 through an internal control loop based on a difference between the second target current Ibatref_2 and the discharge current Ibatfb_2, and outputs the third loop control signal Ibatout_2 to the second DC-DC converter 12. The second DC-DC converter 12 keeps the discharge current Ibatfb_2 at the second target current Ibatref_2, that is, the second DC-DC converter 12 operates in a constant-current discharging mode.

The fourth loop control signal Ubatout_2 is generated in the following manner: The control unit 50 obtains a bus voltage Ubus of the DC-BUS by sampling, and then inputs the bus voltage Ubus and a fourth threshold voltage Ubatref_2 into a third constant-voltage loop controller $G_{4\text{-}2}(S)$. The third constant-voltage loop controller $G_{4\text{-}2}(S)$ calculates a fourth loop control signal Ubatout_2 through an internal control loop based on a difference between the fourth threshold voltage Ubatref_2 and the bus voltage Ubus, and outputs the fourth loop control signal Ubatout_2 to the second DC-DC converter 12. The second DC-DC converter 12 keeps the bus voltage Ubus of the DC-BUS at the fourth threshold voltage Ubatref_2, that is, the second DC-DC converter 12 operates in a constant-voltage discharging mode. In some embodiments of this application, the fourth threshold voltage Ubatref_2 is greater than the fifth threshold voltage Uinvref_1, and less than the second threshold voltage Upvref_2. As an example of this application, the fourth threshold voltage Ubatref_2 is greater than the fifth threshold voltage Uinvref_1 by 10 V, and the fourth threshold voltage Ubatref_2 is less than the second threshold voltage Upvref_2 by 10 V. As another example of this application, the fourth threshold voltage Ubatref_2 is greater than the fifth threshold voltage Uinvref_1 by any one of 5 V, 8 V, or 15 V, or any value falling within [5 V, 15 V]; and the fourth threshold voltage Ubatref_2 is less than the second threshold voltage Upvref_2 by any one of 5 V, 10 V, 15 V, 20 V, or any value falling within [5 V, 20 V].

After generating the third loop control signal Ibatout_2 and the fourth loop control signal Ubatout_2, the control unit 50 selects the one with a smaller signal duty cycle among the two loop control signals, and outputs the selected signal to the second DC-DC converter 12.

In the above embodiment, if the second DC-DC converter 12 operates in the discharging mode, the second DC-DC converter 12 is a bidirectional DC-DC converter, or is a unidirectional DC-DC converter with an output end connected to the DC-BUS.

In the above embodiment, the battery module 30 discharges to supply energy to the DC-BUS. When the energy absorbed by the alternating current power source 40 from the DC-BUS is less than the energy supplied by the battery module 30, the bus voltage Ubus gradually increases. When the bus voltage Ubus increases to a value close to or equal to the fourth threshold voltage Ubatref_2, the signal duty cycle of the fourth loop control signal Ubatout_2 is less than the signal duty cycle of the third loop control signal Ibatout_2. The control unit 50 outputs the fourth loop control signal Ubatout_2 to the second DC-DC converter 12. At this time, the second DC-DC converter 12 operates in a constant-voltage discharging mode.

Correspondingly, if the energy absorbed by the alternating current power source 40 from the DC-BUS gradually increases and is greater than the energy supplied by the battery module 30, the bus voltage Ubus of the DC-BUS gradually decreases, and the signal duty cycle of the fourth loop control signal Ubatout_2 also gradually increases. In this way, the signal received by the second DC-DC converter 12 is switched to the third loop control signal Ibatout_2, and the operating mode of the second DC-DC converter 12 is switched from the constant-voltage discharging mode to the constant-current discharging mode.

In this embodiment, no matter whether the battery module 30 supplies energy to or absorbs energy from an external device, the control unit 50 switches between the constant voltage mode and the constant current mode of the second DC-DC converter 12 based on the change of the bus voltage Ubus of the DC-BUS.

Still referring to FIG. 5, according to some embodiments of this application, the DC-AC inverter 13 is a unidirectional DC-AC inverter 13 or a bidirectional DC-AC inverter 13. The unidirectional DC-AC inverter 13 includes an inverter circuit. The inverter circuit converts the bus voltage Ubus of the DC-BUS into an alternating current voltage, and supplies the alternating current voltage to the alternating current power source 40, and the alternating current power source 40 extracts power from the DC-BUS. The bidirectional DC-AC inverter 13 includes an inverter circuit and a power factor correction circuit. When the inverter circuit operates, the alternating current power source 40 extracts power from the DC-BUS; and when the power factor correction circuit operates, the alternating current power source 40 discharges to the DC-BUS.

In an optional implementation, referring to FIG. 6, the DC-AC inverter 13 includes an inverter circuit 131. The inverter circuit 131 is connected between the DC-BUS and a load, and is electrically connected to the DC-BUS and the load separately. The inverter circuit 131 converts the bus voltage Ubus into an alternating current voltage through inversion, and supplies power to the load. In this implementation, the alternating current power source 40 is connected to the battery module 30 by the power factor correction circuit 132, and the power factor correction circuit 132 rectifies the alternating current voltage output by the alternating current power source 40 into a direct current voltage to charge the battery module 30.

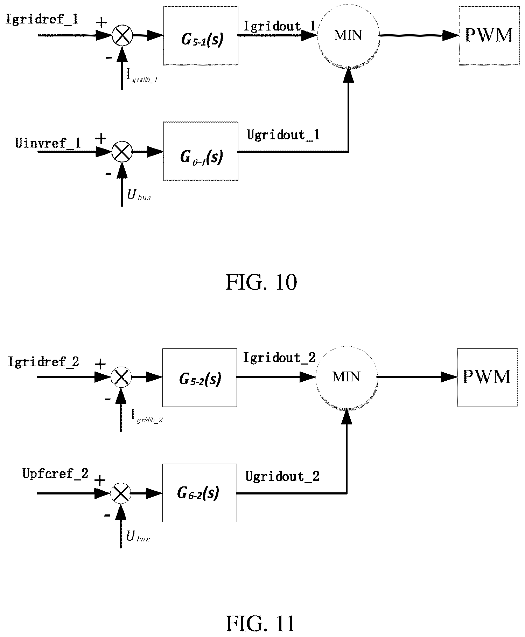

Referring to FIG. 5 and FIG. 10, when the inverter circuit of the DC-AC inverter 13 is in an operating state, the control unit 50 generates a fifth loop control signal Igridout_1 based on an extraction current Igridfb_1 of the inverter circuit, the third target current Igridref_1, and a third constant-current loop controller $G_{5-1}(S)$, and generates a sixth loop control signal Ugridout_1 based on the bus voltage Ubus of the DC-BUS, the fifth threshold voltage Uinvref_1, and the fourth constant-voltage loop controller $G_{6-1}(S)$. Understandably, in this implementation, the DC-AC inverter 13 is a bidirectional inverter.

The third target current Igridref_1 is a current corresponding to a constant-current extraction mode in which the DC-AC inverter 13 operates, and the fifth threshold voltage Uinvref_1 is a voltage corresponding to a constant-voltage extraction mode in which the DC-AC inverter 13 operates.

The fifth loop control signal Igridout_1 is generated in the following manner: The control unit 50 obtains an extraction current Igridfb_1 of the inverter circuit by sampling through a second current sensor, and inputs the extraction current Igridfb_1 and a third target current Igridref_1 into a third constant-current loop controller $G_{5-1}(S)$. The third constant-current loop controller $G_{5-1}(S)$ calculates a fifth loop control signal Igridout_1 through an internal control loop based on a difference between the third target current Igridref_1 and the extraction current Igridfb_1, and outputs the fifth loop control signal Igridout_1 to the second DC-AC inverter 13. The DC-AC inverter 13 keeps the extraction current Igridfb_1 at the third target current Igridref_1, that is, the DC-AC inverter operates in a constant-current extraction mode.

The sixth loop control signal Ugridout_1 is generated in the following manner: The control unit 50 obtains a bus voltage Ubus of the DC-BUS by sampling, and then inputs the bus voltage Ubus and a fifth threshold voltage Uinvref_1 into a fourth constant-voltage loop controller $G_{6-1}(S)$. The fourth constant-voltage loop controller $G_{6-1}(S)$ calculates a sixth loop control signal Ugridout_1 through an internal control loop based on a difference between the fifth threshold voltage Uinvref_1 and the bus voltage Ubus, and outputs the sixth loop control signal Ugridout_1 to the DC-AC inverter 13. The DC-AC inverter 13 keeps the bus voltage Ubus of the DC-BUS at the fifth threshold voltage Uinvref_1, that is, the DC-AC inverter operates in a constant-voltage extraction mode.

After generating the fifth loop control signal Igridout_1 and the sixth loop control signal Ugridout_1, the control unit 50 selects the one with a smaller signal duty cycle among the two loop control signals, and outputs the selected signal to the inverter circuit.

In the above embodiment, when the inverter circuit is in an operating state, the alternating current power source 40 absorbs energy from the DC-BUS. For example, the energy absorbed by the alternating current power source 40 is supplied by the direct current power source 20, or the energy absorbed by the alternating current power source 40 is supplied by the battery module 20, or the energy absorbed by the alternating current power source 40 is supplied by both the direct current power source 20 and the battery module 30. If the energy absorbed by the alternating current power source 40 is less than the energy supplied by the direct current power source 20 and/or the battery module 30, the bus voltage Ubus will increase. When the bus voltage Ubus is relatively high, the difference between the fifth threshold voltage Uinvref_1 and the bus voltage Ubus is relatively large, so that the signal duty cycle of the sixth loop control signal Ugridout_1 is relatively large. The control unit 50 selects and outputs the fifth loop control signal Igridout_1 to the inverter circuit. At this time, the DC-AC inverter 13 operates in a constant-current extraction mode.

When the energy supplied by the direct current power source 20 and/or the battery module 30 is less than the energy absorbed by the alternating current power source 40, the bus voltage Ubus of the DC-BUS gradually decreases. With the decrease of the bus voltage Ubus, the difference between the bus voltage Ubus and the fifth threshold voltage Uinvref_1 also gradually decreases. When the bus voltage Ubus is decreased to a value close to or equal to the fifth threshold voltage Uinvref_1, the signal duty cycle of the sixth loop control signal Ubatout_1 is less than the signal duty cycle of the fifth loop control signal Igridout_1. The signal received by the inverter circuit is switched to the sixth loop control signal Ugridout_1. At this time, the operating mode of the DC-AC inverter is switched from the constant-current extraction mode to the constant-voltage extraction mode.

When the energy supplied by the direct current power source 20 and/or the alternating current power source 40 gradually increases and is greater than the energy absorbed by the alternating current power source 40, the bus voltage Ubus of the DC-BUS gradually increases, and the signal duty cycle of the sixth loop control signal Ugridout_1 also gradually increases. In this way, the signal received by the inverter circuit is switched to the fifth loop control signal Igridout_1, and the operating mode of the DC-AC inverter 13 is switched from the constant-voltage extraction mode to the constant-current extraction mode.

Referring to FIG. 5 and FIG. 11, when the power factor correction circuit of the DC-AC inverter 13 is in an operating state, the control unit 50 generates a fifth loop control signal Igridout_2 based on a discharge current Igridfb_2 of the power factor correction circuit, the fourth target current Igridref_2, and a fourth constant-current loop controller $G_{5-2}(S)$, and generates a sixth loop control signal Ugridout_2 based on the bus voltage Ubus of the DC-BUS, the sixth threshold voltage Upfcref_2, and the fifth constant-voltage loop controller $G_{6-2}(S)$.

The fourth target current Igridref_2 is a current corresponding to a constant-current discharging mode in which the DC-AC inverter 13 operates, and the sixth threshold voltage Upfcref_2 is a voltage corresponding to a constant-voltage discharging mode in which the DC-AC inverter 13 operates.

The fifth loop control signal Igridout_2 is generated in the following manner: The control unit 50 obtains a discharge current Igridfb_2 of the power factor correction circuit by sampling through a second current sensor, and inputs the discharge current Igridfb_2 and a fourth target current Igridref_2 into a fifth constant-current loop controller. The fifth constant-current loop controller calculates a fifth loop control signal Igridout_2 through an internal control loop based on a difference between the fourth target current Igridref_2 and the discharge current Igridfb_2, and outputs the fifth loop control signal Igridout_2 to the DC-AC inverter 13. The DC-AC inverter 13 keeps the discharge current Igridfb_2 at the fourth target current Igridref_2, that is, the DC-AC inverter 13 operates in a constant-current discharging mode.

The sixth loop control signal Ugridout_2 is generated in the following manner: The control unit 50 obtains a bus voltage Ubus of the DC-BUS by sampling, and then inputs the bus voltage Ubus and a sixth threshold voltage Upfcref_2 into a fifth constant-voltage loop controller $G_{6-2}(S)$. The fifth constant-voltage loop controller $G_{6-2}(S)$ calculates a sixth loop control signal Ugridout_2 through an internal control loop based on a difference between the sixth threshold voltage Upfcref_2 and the bus voltage Ubus, and outputs the sixth loop control signal Ugridout_2 to the DC-AC inverter 13. The DC-AC inverter 13 keeps the bus voltage Ubus of the DC-BUS at the sixth threshold voltage Upfcref_2, that is, the DC-AC inverter 13 operates in a constant-voltage discharging mode.

After generating the fifth loop control signal Igridout_2 and the sixth loop control signal Ugridout_2, the control unit 50 selects the one with a smaller signal duty cycle among the two loop control signals, and outputs the selected signal to the power factor correction circuit.

In the above embodiment, when the power factor correction circuit of the DC-AC inverter 13 is in an operating state, the alternating current power source 40 supplies energy to the DC-BUS. If the bus energy supplied by the alternating current power source 40 is lower than the bus energy absorbed by the battery module 30, the bus voltage Ubus will be reduced. When the bus voltage Ubus is relatively low, the difference between the bus voltage Ubus and the sixth threshold voltage Upfcref_2 is relatively large, so that the signal duty cycle of the sixth loop control signal Ugridout_2 is relatively large. The control unit 50 selects and outputs the fifth loop control signal Igridout_2 to the DC-AC inverter circuit 13. At this time, the DC-AC inverter 13 operates in a constant-current discharging mode.

When the energy absorbed by the battery module 30 from the DC-BUS is less than the energy supplied by the alternating current power source 40, the bus voltage Ubus of the DC-BUS will gradually increase. With the increase of the bus voltage Ubus, the difference between the bus voltage Ubus and the sixth threshold voltage Upfcref_2 also gradually decreases. When the bus voltage Ubus is elevated to a value close to or equal to the sixth threshold voltage Upfcref_2, the signal duty cycle of the sixth loop control signal Ugridout_2 is less than the signal duty cycle of the fifth loop control signal Igridout_2. The signal received by the DC-AC inverter 13 is switched to the sixth loop control signal Ugridout_2. At this time, the operating mode of the DC-AC inverter 13 is switched from the constant-current discharging mode to the constant-voltage discharging mode.

Based on the above embodiments, when the power conversion unit 10 is connected to a plurality of energy input and output modules (direct current power source 20, battery module 30, and alternating current power source 30), the energy input and output converge at the DC-BUS. The flow directions of energy at the DC-BUS come in a plurality of combinations. In the above implementation, by setting sub-power converters (the first DC-DC converter 11, the second DC-DC converter 12, the DC-AC inverter 13) in the power conversion unit 10 to correspond to different constant voltage setpoints at the DC-BUS, this application implements decoupling of complex energy distribution at the DC-BUS. When a sub-power converter operates in a constant current mode, a loop control signal corresponding to the constant current mode makes the sub-power converter operate in the constant current mode to implement constant-current charging or constant-current discharging. For example, during charging of the battery module 30, a constant voltage setpoint of the DC-BUS is the third threshold voltage Ubatref_1. If the energy supplied by another module to the DC-BUS can meet the requirement of the energy absorbed by the battery module 30, the sub-power converter electrically connected to the battery module 30 operates in a constant-current charging mode. The bus voltage Ubus of the DC-BUS is controlled by another sub-power converter. In other words, at this time, the bus voltage Ubus is far away from the third threshold voltage Ubatref_1. During discharging of the battery module 30, the constant voltage setpoint of the DC-BUS is the fourth threshold voltage Ubatref_2. By setting the fourth threshold voltage Ubatref_2 to be higher than the fifth threshold voltage Uinvref_1 for power extraction by the alternating current power source 40, this application keeps the bus voltage Ubus at the fourth threshold voltage Ubatref_2 when the energy supplied by the battery module 30 is greater than the energy absorbed by the alternating current power source 40. At this time, the sub-power converter electrically connected to the alternating current power source 40 operates in a constant-current extraction mode. Conversely, if the energy supplied by the battery module 30 is less than the energy absorbed by the alternating current power source 40, the bus voltage Ubus will drop to the fifth threshold voltage Uinvref_1. At this time, the sub-power converter electrically connected to the alternating current power source 40 operates in a constant-voltage extraction mode, and the sub-power converter electrically connected to the battery module 30 operates in a constant-current discharging mode.

According to some embodiments of this application, the relationship between the second threshold voltage Upvref_2, the third threshold voltage Ubatref_1, the fourth threshold voltage Ubatref_2, the fifth threshold voltage Uinvref_1, and the sixth threshold voltage Upfcref_2 is:

$$Upvref\_2 > Ubatref\_2 > Uinvref\_1 = Upfcref\_2 > Ubatref\_1;$$

or

$$Upvref\_2 > Ubatref\_2 > Ubatref\_1 > Uinvref\_1 = Upfcref\_2.$$

As an optional implementation, when the bus voltage Ubus is close to Upvref_2, the first DC-DC converter 11 electrically connected to the direct current power source 20 operates in a constant voltage mode, and the second DC-DC converter 12 electrically connected to the battery module 30 and/or the DC-AC inverter 13 electrically connected to the alternating current power source 40 operates in a constant current mode.

When the battery module 30 is charged and absorbs energy, if the bus voltage Ubus is close to or little different from Ubatref_1, the second DC-DC converter 12 electrically connected to the battery module 30 operates in a constant-voltage charging mode, and the first DC-DC converter 11 electrically connected to the direct current power source 20 and/or the DC-AC inverter 13 electrically connected to the alternating current power source 40 operates in a constant current mode.

When the battery module 30 discharges and supplies energy to an external device, if the bus voltage Ubus is close to Ubatref_2, the second DC-DC converter 12 electrically connected to the battery module 30 operates in a constant-voltage discharging mode, and the DC-AC inverter 13 electrically connected to the alternating current power source 40 operates in a constant current mode.

When the alternating current power source 40 extracts power and absorbs energy from an external source, if the bus voltage Ubus is close to Uinvref_1, the DC-AC inverter 13 electrically connected to the alternating current power source 40 operates in a constant-voltage extraction mode, and the second DC-DC converter 12 electrically connected to the battery module 30 and/or the first DC-DC converter 11 electrically connected to the direct current power source 20 operates in a constant current mode.

When the alternating current power source 40 discharges and supplies energy to an external device, if the bus voltage Ubus is close to Upfcref_2, the DC-AC inverter 13 electrically connected to the alternating current power source 40 operates in a constant-voltage discharging mode, and the second DC-DC converter 12 electrically connected to the battery module 30 operates in a constant current mode.

In the above two value relationships, the second threshold voltage Upvref_2 is set to be a maximum threshold voltage among the second threshold voltage to the sixth threshold voltage. When the second DC-DC converter 12 operates in the constant-voltage charging mode or the DC-AC inverter operates in the constant-voltage extraction mode, because a voltage difference between the bus voltage Ubus and the second threshold voltage Upvref_2 is relatively large at this time, the signal duty cycle of the second loop control signal Upvout_2 is greater than that of the first loop control signal Upvout_1. When the energy absorbed by the battery module 30 and/or the alternating current power source 40 is less than the energy supplied by the direct current power source 20, the bus voltage Ubus gradually increases due to excess energy on the DC-BUS. When the bus voltage Ubus increases to a value close to the second threshold voltage Upvref_2, the first DC-DC converter 11 switches to a constant voltage mode. In other words, within an allowable range of the bus voltage Ubus, the direct current power source 20 is made to operate in a maximum power point tracking mode as far as possible.

In the above value relationships, the first value relationship meets: Ubatref_2 > Uinvref_1 = Upfcref_2 > Ubatref_1. That is, during charging of the battery module 30, the constant voltage setpoint Ubatref_1 corresponding to the constant-voltage charging mode in which the second DC-DC converter 12 operates is less than the constant voltage setpoint Upfcref_2 of the power factor correction circuit. This elevates the bus voltage Ubus to Upfcref_2 when the energy supplied by the alternating current power source 40 is greater than or equal to the energy absorbed by the battery module 30, makes the DC-AC inverter 13 operate in a constant-voltage discharging mode, and makes the second DC-DC converter 12 operate in a constant-current charging mode, so as to implement maximum-current charging. When the battery module 30 is discharging, the constant voltage setpoint Ubatref_2 corresponding to the constant-voltage discharging mode in which the second DC-DC converter 12 operates is greater than the constant voltage setpoint Uinvref_1 of the inverter circuit. This elevates the bus voltage Ubus to Ubatref_2 when the energy supplied by the battery module 30 is greater than or equal to the energy absorbed by the alternating current power source 40, makes the second DC-DC converter 12 operate in a constant-voltage discharging mode, and makes the DC-AC inverter 13 operate in a constant-current extraction mode.

In the above implementation, if the energy supplied to the DC-BUS is greater than the energy absorbed from the DC-BUS, the energy-supplying module operates in a constant voltage mode, and the energy-absorbing module operates in a constant current mode. If the energy supplied to the DC-BUS is less than the energy absorbed from the DC-BUS, the energy-supplying module operates in a constant current mode, and the energy-absorbing module operates in a constant voltage mode.

In the second value relationship, Ubatref_2 > Ubatref_1 > Uinvref_1 = Upfcref_2. To ensure that the energy of the direct current power source 20 is preferentially suppled to the alternating current power source 30 to power up a load, and in order to prevent the second DC-DC converter 12 from extracting power from the alternating current power source 30, Ubatref_1 is set to be greater than Uinvref_1.

In the above embodiments of this application, an example is given in which the power conversion unit 10 is electrically connected to two of a plurality of energy input and output modules (the direct current power source 20, the battery module 30, and the alternating current power source 30). Of the two modules, one supplies energy and the other absorbs energy.

When the energy supplied by the energy-supplying module is greater than the energy absorbed by the energy-absorbing module, the sub-power converter (the first DC-DC converter 11, the second DC-DC converter 12, or the DC-AC inverter 13) connected to the energy-absorbing module operates in a constant current mode, and the sub-power converter connected to the energy-supplying module operates in a constant voltage mode. At this time, the energy-absorbing module absorbs energy at a normal power, and the sub-power converter connected to the energy-supplying module supplies energy by using a threshold voltage corresponding to the constant voltage mode as a setpoint of the bus voltage. When the bus voltage reaches or approaches the threshold voltage corresponding to the constant voltage mode, the supplied energy is close to the absorbed energy, so that the bus voltage is kept within a stable voltage range. By making the sub-power converter operate in a constant voltage mode, this application avoids bus overvoltage caused by an excessive power at which the energy-supplying module supplies energy.

When the energy supplied by the energy-supplying module is less than the energy absorbed by the energy-absorbing module, the sub-power converter (the first DC-DC converter 11, the second DC-DC converter 12, or the DC-AC inverter 13) connected to the energy-supplying module operates in a constant current mode, and the sub-power converter connected to the energy-absorbing module operates in a constant voltage mode. At this time, the energy-supplying module supplies energy at a normal power, and the sub-power converter corresponding to the energy-absorbing module absorbs energy by using a threshold voltage corresponding to the constant voltage mode as a setpoint of the bus voltage. When the bus voltage reaches or approaches the threshold voltage corresponding to the constant voltage mode, the supplied energy is close to the absorbed energy, so that the bus voltage is kept within a stable voltage range. By making the sub-power converter operate in a constant voltage mode, this application avoids bus undervoltage caused by an excessive power at which the energy-absorbing module absorbs energy.

In another optional embodiment, an example is given in which the power conversion unit 10 is electrically connected to three of a plurality of energy input and output modules (the direct current power source 20, the battery module 30, and the alternating current power source 30). The three modules are connected to three sub-power converters respectively. One of the sub-power converters operates in a constant voltage mode so that the bus voltage approaches the constant voltage setpoint corresponding to the constant voltage mode of the sub-power converter. The other two sub-power converters operate in a constant current mode or maximum power point tracking mode. By setting a plurality of threshold voltages to respectively serve as the constant voltage setpoints of the sub-power converters that operate in different operating modes, this application makes the bus voltage approach a specified threshold voltage or keeps the bus voltage within a voltage range when all the threshold voltages fall within the normal voltage range of the bus voltage, so as to avoid bus overvoltage or bus undervoltage.

## Power distribution method

This application further provides a power distribution method based on and corresponding to the power conversion system provided in the above embodiments, as described in the following embodiments:

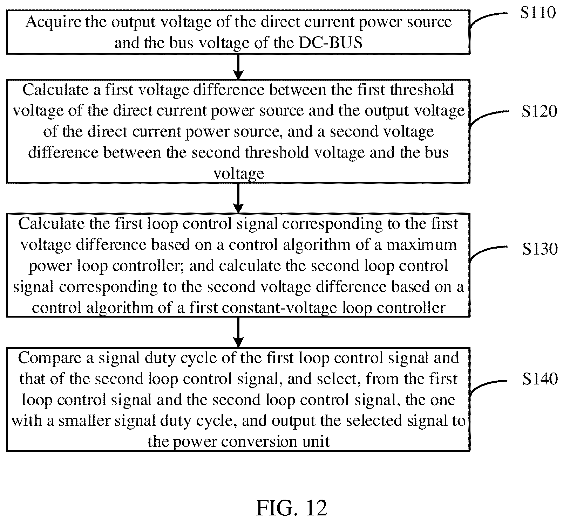

Referring to FIG. 12, a power distribution method according to an embodiment of this application includes the following steps:

S110: Acquire the output voltage of the direct current power source and the bus voltage of the DC-BUS.

S120: Calculate a first voltage difference between the first threshold voltage of the direct current power source and the output voltage of the direct current power source, and a second voltage difference between the second threshold voltage and the bus voltage.

S130: Calculate the first loop control signal corresponding to the first voltage difference based on a control algorithm of a maximum power loop controller; and calculate the second loop control signal corresponding to the second voltage difference based on a control algorithm of a first constant-voltage loop controller.

S140: Compare a signal duty cycle of the first loop control signal and that of the second loop control signal, and select, from the first loop control signal and the second loop control signal, the one with a smaller signal duty cycle, and output the selected signal to the power conversion unit.

In this embodiment, after the output voltage of the direct current power source and the bus voltage of the DC-BUS are acquired, the first loop control signal is generated based on the first voltage difference between the output voltage and the first threshold voltage, and the second loop control signal is generated based on the difference between the bus voltage and the second threshold voltage. After the first loop control signal and the second loop control signal are generated, the one with a smaller signal duty cycle among the two loop control signals is output to the power conversion unit. When the signal duty cycle of a specified loop control signal is reduced from a level higher than the other loop control signal to a level lower than the other loop control signal, the output can be switched between the loop control signals, thereby switching the operating mode of the direct current power source to maintain an energy balance in the power conversion system. In the above process, no software logic operation is required, and the control unit can switch the operating mode by comparing and analyzing the signal duty cycle.

The specific implementations of the above steps are described below.

In step S110, when the power conversion unit in the power conversion system is electrically connected to the direct current power source, the control unit acquires the output voltage of the direct current power source and the bus voltage of the DC-BUS.

In step S120, which uses an example in which the direct current power source is a photovoltaic module, the first threshold voltage of the direct current power source is a maximum power point tracking (MPPT) voltage of the photovoltaic module. When the output voltage of the direct current power source is the first threshold voltage, the direct current power source outputs a maximum power, so as to supply energy to the DC-BUS.

After the first threshold voltage is calculated by using a maximum power point algorithm, the acquired output voltage of the direct current power source is subtracted from the calculated first threshold voltage to obtain a first voltage difference.

The control unit further obtains a second threshold voltage. The second threshold voltage is a constant voltage setpoint corresponding to the constant voltage mode in which the first DC-DC converter operates. In addition, the control unit subtracts the acquired bus voltage of the DC-BUS from the second threshold voltage to obtain a second voltage difference.

In step S130, after the first voltage difference is obtained, a first loop control signal is calculated based on the first voltage difference according to a control algorithm of the maximum power loop controller. After the first loop control signal is output to the power conversion unit, the first DC-DC converter is controlled to operate in a maximum power point tracking mode.

After the second voltage difference is obtained, a second loop control signal is obtained based on the second voltage difference and based on the control algorithm of the first constant-voltage loop controller. After the second loop control signal is output to the power conversion unit, the first DC-DC converter is controlled to operate in a constant voltage mode.

In step S140, after the first loop control signal and the second loop control signal are obtained, the duty cycle is compared between the two loop control signals. The one with a smaller signal duty cycle among the two loop control signals is output to the power conversion unit.

In the above embodiment, the control unit generates two loop control signals in real time and selects and outputs one of the two signals to the power conversion unit. Therefore, when the signal duty cycle of a specified loop control signal is reduced from a level higher than the other loop control signal to a level lower than the other loop control signal, the output can be switched between the loop control signals, thereby switching the operating mode of the first DC-DC converter to maintain an energy balance in the power conversion system. In the above process, no software logic operation is required, and the control unit can switch the operating mode of the first DC-DC converter by comparing and analyzing the signal duty cycle.

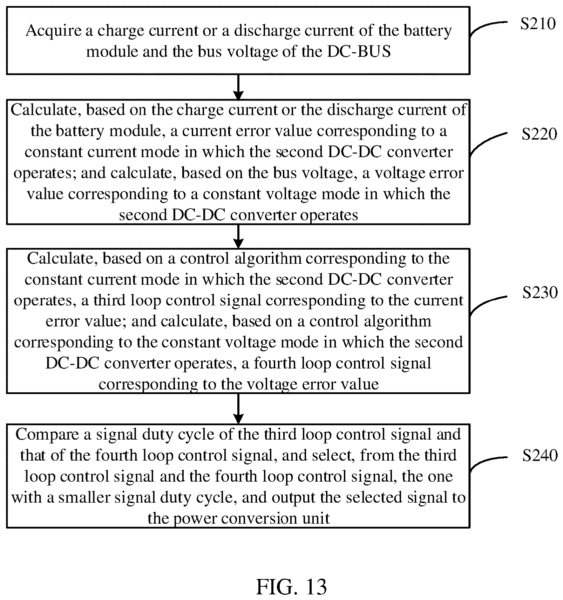

Referring to FIG. 13, this application further provides a power distribution method. The power distribution method further includes:

S210: Acquire a charge current or a discharge current of the battery module and the bus voltage of the DC-BUS;

S220: Calculate, based on the charge current or the discharge current of the battery module, a current difference value corresponding to a constant current mode in which the second DC-DC converter operates; and calculate, based on the bus voltage, a voltage difference value corresponding to a constant voltage mode in which the second DC-DC converter operates;

S230: Calculate, based on a control algorithm corresponding to the constant current mode in which the second DC-DC converter operates, a third loop control signal corresponding to the current difference value; and calculate, based on a control algorithm corresponding to the constant voltage mode in which the second DC-DC converter operates, a fourth loop control signal corresponding to the voltage difference value; and

S240: Compare a signal duty cycle of the third loop control signal and that of the fourth loop control signal, and select, from the third loop control signal and the fourth loop control signal, the one with a smaller signal duty cycle, and output the selected signal to the power conversion unit.

In this embodiment, after the charge current or discharge current is acquired based on the charging or discharging mode of the second DC-DC converter, a current difference value is calculated based on the charge current or the discharge current, and a voltage difference value is calculated based on the acquired bus voltage. Based on the control algorithm corresponding to the constant current mode in which the second DC-DC converter operates, a third loop control signal corresponding to the current difference value is calculated; and based on the control algorithm corresponding to the constant voltage mode in which the second DC-DC converter operates, a fourth loop control signal corresponding to the voltage difference value is calculated. After the third loop control signal and the fourth loop control signal are generated, the one with a smaller signal duty cycle among the two loop control signals is output to the power conversion unit. When the signal duty cycle of a specified loop control signal is reduced from a level higher than the other loop control signal to a level lower than the other loop control signal, the output can be switched between the loop control signals, thereby switching the operating mode of the second DC-DC converter to maintain an energy balance in the power conversion system. In the above process, no software logic operation is required, and the control unit can switch the operating mode of the second DC-DC converter by comparing and analyzing the signal duty cycle.

In step S210, when the power conversion unit in the power conversion system is electrically connected to the battery module, the control unit acquires the charge current or discharge current of the battery module and the bus voltage of the DC-BUS.

It is hereby noted that the acquiring the charge current or discharge current of the battery module and the bus voltage of the DC-BUS means acquiring the charge current of the second DC-DC converter and the bus voltage of the DC-BUS when the second DC-DC converter is in a charging mode, and acquiring the discharge current of the second DC-DC converter and the bus voltage of the DC-BUS when the second DC-DC converter is in a discharging mode.

In S220, when the second DC-DC converter is in a charging mode, a current difference value corresponding to the constant current mode in which the second DC-DC converter operates is calculated based on the charge current of the second DC-DC converter. When the second DC-DC converter is in a discharging mode, a current difference value corresponding to the constant current mode in which the second DC-DC converter operates is calculated based on the discharge current of the second DC-DC converter. A voltage difference value corresponding to a constant voltage mode in which the second DC-DC converter operates is calculated based on the bus voltage of the DC-BUS.

According to some embodiments of this application, the calculating, based on the charge current or the discharge current of the battery module , a current difference value corresponding to a constant current mode in which the second DC-DC converter operates, includes:

S310: Calculate, in response to a condition that the second DC-DC converter operates in a charging mode, a first current difference between the charge current of the battery module and a first target current corresponding to a constant-current charging mode;

and/or,

S320: Calculate, in response to a condition that the second DC-DC converter operates in a discharging mode, a second current difference between the discharge current of the battery module and a second target current corresponding to a constant-current discharging mode;

The calculating, based on the bus voltage, a voltage difference value corresponding to a constant voltage mode in which the second DC-DC converter operates, includes:

S330: Calculate a third voltage difference between the third threshold voltage and the bus voltage in response to a condition that the second DC-DC converter operates in the charging mode;

and/or,

S340: Calculate a fourth voltage difference between the fourth threshold voltage and the bus voltage in response to a condition that the second DC-DC converter operates in the discharging mode.

In this embodiment, the current difference and the voltage difference in the charging mode, or the current difference and the voltage difference in the discharging mode, are calculated separately based on the operating mode of the second DC-DC converter.

In step S310, when the second DC-DC converter operates in the charging mode, the battery module is in a charging state and absorbs energy from the DC-BUS. At this time, the charge current of the battery module is acquired, and the charge current is subtracted from the first target current corresponding to the constant-current charging mode to obtain the first current difference.

In step S320, when the second DC-DC converter operates in the discharging mode, the battery module is in a discharging state, and supplies energy to the DC-BUS. At this time, the discharge current of the battery module is acquired, and the discharge current is subtracted from the second target current corresponding to the constant-current discharging mode to obtain the second current difference.

It is hereby noted that in the above embodiment of the power conversion system, the second DC-DC converter is a unidirectional DC-DC converter or a bidirectional DC-DC converter. When the second DC-DC converter is a bidirectional DC-DC converter, the second DC-DC converter operates in both a charging mode and a discharging mode. When the second DC-DC converter is a unidirectional DC-DC converter, the second DC-DC converter can operate in only a charging mode or only a discharging mode.

In step S330, when the second DC-DC converter operates in the charging mode, the battery module is in a charging state and absorbs energy from the DC-BUS. At this time, a third threshold voltage is obtained. The third threshold voltage is a constant voltage setpoint corresponding to a constant-voltage charging mode in which the battery module operates. A third voltage difference may be obtained by subtracting the bus voltage from the third threshold voltage.

In step S340, when the second DC-DC converter operates in the discharging mode, the battery module is in a discharging state, and supplies energy to the DC-BUS. At this time, a fourth threshold voltage is obtained. The fourth threshold voltage is a constant voltage setpoint corresponding to a constant-voltage discharging mode in which the battery module operates. A fourth voltage difference may be obtained by subtracting the bus voltage from the fourth threshold voltage.

In step S230, after the current difference value is obtained, a third loop control signal is calculated based on a control algorithm corresponding to the constant current mode in which the second DC-DC converter operates. After the voltage difference value is obtained, a fourth loop control signal is calculated based on a control algorithm corresponding to the constant voltage mode in which the second DC-DC converter operates.

According to some embodiments of this application, the calculating the third loop control signal corresponding to the current difference value based on the control algorithm corresponding to the constant current mode in which the second DC-DC converter operates includes:

S410: Calculate, in response to a condition that the second DC-DC converter operates in a charging mode, a third loop control signal corresponding to the first current difference based on a control algorithm of a first constant-current loop controller;

and/or,

S420: Calculate, in response to a condition that the second DC-DC converter operates in discharging mode, a third loop control signal corresponding to the second current difference based on a control algorithm of a second constant-current loop controller.

The calculating, based on a control algorithm corresponding to the constant voltage mode in which the second DC-DC converter operates, a fourth loop control signal corresponding to the voltage difference value, includes:

S430: Calculate, in response to a condition that the second DC-DC converter operates in the charging mode, a fourth loop control signal corresponding to the third voltage difference based on a control algorithm of a second constant-voltage loop controller; and/or,
S440: Calculate, in response to a condition that the second DC-DC converter operates in the discharging mode, a fourth loop control signal corresponding to the fourth voltage difference based on a control algorithm of a third constant-voltage loop controller.

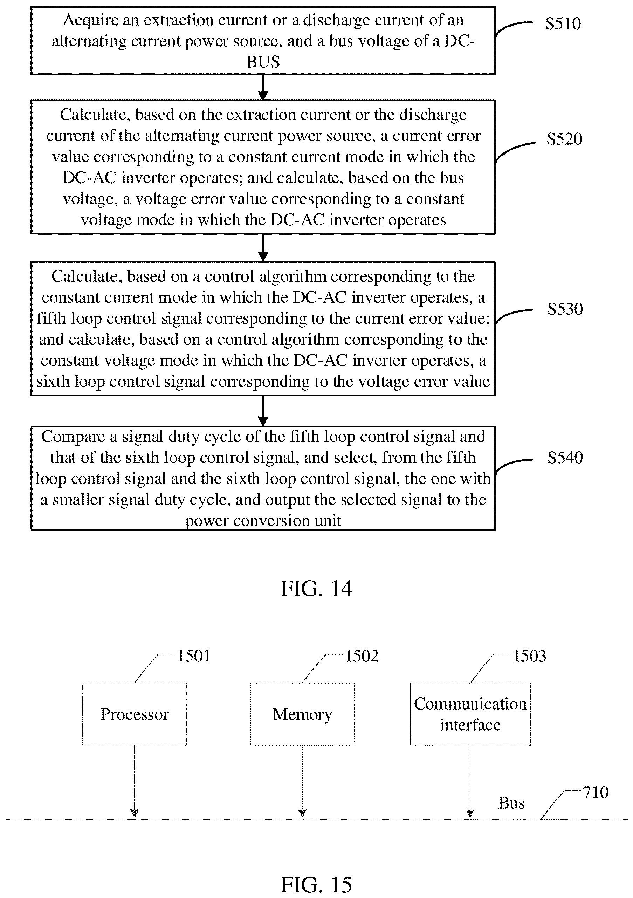

In this embodiment, based on the operating mode of the second DC-DC converter and based on the current difference and the voltage difference, this application generates the third loop control signal and the fourth loop control signal by using the corresponding constant-current loop controller and constant-voltage loop controller.
In step S410, when the second DC-DC converter operates in the charging mode, the battery module is in a charging state and absorbs energy from the DC-BUS. The third loop control signal corresponding to the first current difference is calculated based on the control algorithm of the first constant-current loop controller.
In step S420, when the second DC-DC converter operates in the discharging mode, the battery module is in a discharging state, and supplies energy to the DC-BUS. The third loop control signal corresponding to the second current difference is calculated based on the control algorithm of the second constant-current loop controller.
In step S430, when the second DC-DC converter operates in the charging mode, the battery module is in a charging state and absorbs energy from the DC-BUS. The fourth loop control signal corresponding to the third voltage difference is calculated based on the control algorithm of the second constant-voltage loop controller.
In step S440, when the second DC-DC converter operates in the discharging mode, the battery module is in a discharging state, and supplies energy to the DC-BUS. The fourth loop control signal corresponding to the fourth voltage difference is calculated based on the control algorithm of the third constant-voltage loop controller.
In step S240, after the third loop control signal and the fourth loop control signal are generated, the signal duty cycle of the third loop control signal is compared with that of the fourth loop control signal, and the loop control signal with a smaller signal duty cycle is selected and output to the power conversion unit.
Referring to FIG. 14, this application further provides a power distribution method. The power distribution method further includes:

S510: Acquire an extraction current or a discharge current of an alternating current power source, and a bus voltage of a DC-BUS;
S520: Calculate, based on the extraction current or the discharge current of the alternating current power source, a current difference value corresponding to a constant current mode in which the DC-AC inverter operates; and calculate, based on the bus voltage, a voltage difference value corresponding to a constant voltage mode in which the DC-AC inverter operates;
S530: Calculate, based on a control algorithm corresponding to the constant current mode in which the DC-AC inverter operates, a fifth loop control signal corresponding to the current difference value; and calculate, based on a control algorithm corresponding to the constant voltage mode in which the DC-AC inverter operates, a sixth loop control signal corresponding to the voltage difference value; and
S540: Compare a signal duty cycle of the fifth loop control signal and that of the sixth loop control signal, and select, from the fifth loop control signal and the sixth loop control signal, the one with a smaller signal duty cycle, and output the selected signal to the power conversion unit.

In this embodiment, after the extraction current or discharge current is acquired based on the power extraction mode or discharging mode of the DC-AC inverter, a current difference value is calculated based on the extraction current or discharge current, and a voltage difference value is calculated based on the acquired bus voltage. Based on the control algorithm corresponding to the constant current mode, the fifth loop control signal corresponding to the current difference value is calculated. The sixth loop control signal corresponding to the voltage difference value is calculated based on the control algorithm corresponding to the constant voltage mode. After the fifth loop control signal and the sixth loop control signal are generated, the one with a smaller signal duty cycle among the two loop control signals is output to the power conversion unit. When the signal duty cycle of a specified loop control signal is reduced from a level higher than the other loop control signal to a level lower than the other loop control signal, the output can be switched between the loop control signals, thereby switching the operating mode of the DC-AC inverter to maintain an energy balance in the power conversion system. In the above process, no software logic operation is required, and the control unit can switch the operating mode of the DC-AC inverter by comparing and analyzing the signal duty cycle.

In step S510, when the power conversion unit in the power conversion system is electrically connected to the alternating current power source, the control unit acquires the extraction current or discharge current of the alternating current power source and the bus voltage of the DC-BUS.

It is hereby noted that the acquiring the extraction current or discharge current of the alternating current power source and the bus voltage of the DC-BUS means acquiring the extraction current of the DC-AC inverter and the bus voltage of the DC-BUS when the DC-AC inverter is in a power extraction mode, and acquiring the discharge current of the DC-AC inverter and the bus voltage of the DC-BUS when the DC-AC inverter is in a discharging mode.

In S520, when the DC-AC inverter is in the power extraction mode, the current difference value corresponding to the constant current mode in which the alternating current power source operates is calculated based on the extraction current. When the DC-AC inverter is in a discharging mode, the current difference value corresponding to the constant current mode in which the DC-AC inverter operates is calculated based on the discharge current. The voltage difference value corresponding to the constant voltage mode is calculated based on the bus voltage of the DC-BUS.

According to some embodiments of this application, the calculating, based on the extraction current or discharge current of the DC-AC inverter, a current difference value corresponding to a constant current mode in which the DC-AC inverter operates, includes:

S610: Calculate, in response to a condition that an inverter circuit is in an operating state, a third current difference between the extraction current of the alternating current power source and the third target current corresponding to a constant-current extraction mode;
and/or,
S620: Calculate, in response to a condition that a power factor correction circuit is in an operating state, a fourth current difference between the discharge current of the alternating current power source and the fourth target current corresponding to a constant-current discharging mode;
The calculating, based on the bus voltage, a voltage difference value corresponding to a constant voltage mode in which the DC-AC inverter operates, includes:

S630: Calculate a fifth voltage difference between the fifth threshold voltage and the bus voltage in response to a condition that the inverter circuit is in an operating state;
and/or,
S640: Calculate a sixth voltage difference between the sixth threshold voltage and the bus voltage in response to a condition that the power factor correction circuit is in an operating state.

In this embodiment, the current difference and the voltage difference in the power extraction mode or the current difference and the voltage difference in the discharging mode are calculated separately based on the operating state of the inverter circuit and the power factor correction circuit.

In step S610, when the inverter circuit is in an operating state, the alternating current power source is in a power extraction state, and absorbs energy from the DC-BUS. At this time, the extraction current of the alternating current power source is acquired, and the difference between the extraction current and the third target current corresponding to the constant-current extraction mode is calculated to obtain the third current difference.

In step S620, when the power factor correction circuit is in an operating state, the alternating current power source is in a discharging state, and supplies energy to the DC-BUS. At this time, the discharge current of the alternating current power source is acquired, and the difference between the discharge current and the fourth target current corresponding to the constant-current discharging mode is calculated to obtain the fourth current difference.

It is hereby noted that in the above embodiment of the power conversion system, the DC-AC inverter includes a unidirectional DC-AC inverter or a bidirectional DC-AC inverter. The unidirectional DC-AC inverter includes an inverter circuit, and the bidirectional DC-AC inverter includes an inverter circuit and a power factor correction circuit. Therefore, when the DC-AC inverter includes a unidirectional DC-AC inverter, only the inverter circuit can be in an operating state; when the DC-AC inverter includes a bidirectional DC-AC inverter, the inverter circuit can be in an operating state and the alternating current power source 40 absorbs energy from the DC-BUS, the power factor correction circuit can be in an operating state and the alternating current power source 40 supplies energy to the DC-BUS.

In step S630, when the inverter circuit is in an operating state, the alternating current power source is in a power extraction state, and absorbs energy from the DC-BUS. At this time, a fifth threshold voltage is obtained. The fifth threshold voltage is a constant voltage setpoint corresponding to a constant-voltage extraction mode in which the alternating current power source operates. A difference between the fifth threshold voltage and the bus voltage is calculated to obtain a fifth voltage difference.

In step S640, when the power factor correction circuit is in an operating state, the alternating current power source is in a discharging state, and supplies energy to the DC-BUS. At this time, a sixth threshold voltage is obtained. The sixth threshold voltage is a constant voltage setpoint corresponding to a constant-voltage discharging mode in which the alternating current power source operates. A difference between the sixth threshold voltage and the bus voltage is calculated to obtain a sixth voltage difference.

In step S530, after the current difference value is obtained, a fifth loop control signal is calculated based on a control algorithm corresponding to the constant current mode in which the DC-AC inverter operates. After the voltage difference value is obtained, a sixth loop control signal is calculated based on a control algorithm corresponding to the constant voltage mode in which the DC-AC inverter operates.

According to some embodiments of this application, the calculating the fifth loop control signal corresponding to the current difference value based on the control algorithm corresponding to the constant current mode in which the DC-AC inverter operates includes:

> S710: Calculate, in response to a condition that the inverter circuit is in an operating state, a fifth loop control signal corresponding to a third current difference based on a control algorithm of a third constant-current loop controller; and/or
> S720: Calculate, in response to a condition that the power factor correction circuit is in an operating state, a fifth loop control signal corresponding to a fourth current difference based on a control algorithm of a fourth constant-current loop controller;
> The calculating, based on a control algorithm corresponding to the constant voltage mode in which the DC-AC inverter operates, a sixth loop control signal corresponding to the voltage difference value, includes:

> S730: Calculate, in response to a condition that the inverter circuit is in an operating state, a sixth loop control signal corresponding to a fifth voltage difference based on a control algorithm of a fourth constant-voltage loop controller; and/or
> S740: Calculate, in response to a condition that the power factor correction circuit is in an operating state, a sixth loop control signal corresponding to a sixth voltage difference based on a control algorithm of a fifth constant-voltage loop controller.

In this embodiment, depending on the operating state of the inverter circuit and the power factor correction circuit, based on the current difference and the voltage difference, this application generates the fifth loop control signal and the sixth loop control signal by using the corresponding constant-current loop controller and constant-voltage loop controller.

In step S610, when the inverter circuit is in an operating state, the alternating current power source is in a power extraction state, and absorbs energy from the DC-BUS. The fifth loop control signal corresponding to the third current difference is calculated based on the control algorithm of the third constant-current loop controller.

In step S620, when the power factor correction circuit is in an operating state, the alternating current power source is in a discharging state, and supplies energy to the DC-BUS. The fifth loop control signal corresponding to the fourth current difference is calculated based on the control algorithm of the fourth constant-current loop controller.

In step S630, when the inverter circuit is in an operating state, the alternating current power source is in a power extraction state, and absorbs energy from the DC-BUS. The sixth loop control signal corresponding to the fifth voltage difference is calculated based on the control algorithm of the fourth constant-voltage loop controller.

In step S640, when the power factor correction circuit is in an operating state, the alternating current power source is in a discharging state, and supplies energy to the DC-BUS. The sixth loop control signal corresponding to the sixth voltage difference is calculated based on the control algorithm of the fifth constant-voltage loop controller.

In step S540, after the fifth loop control signal and the sixth loop control signal are generated, the signal duty cycle of the fifth loop control signal is compared with that of the sixth loop control signal, and the loop control signal with a smaller signal duty cycle is selected and output to the power conversion unit.

**Electronic device**

FIG. 15 is a schematic diagram of a hardware structure of an electronic device according to an embodiment of this application. The electronic device is at least one of a computer, a server, or a specialized document generation device. The electronic device includes a processor 1501 and a memory 1502 that stores a computer program instruction.

Specifically, the processor 1501 includes a central processing unit (CPU), or an application-specific integrated circuit (ASIC), or one or more integrated circuits configured to implement an embodiment of this application.

The memory 1502 includes a mass storage for data or instructions. By way of example and not limitation, the memory 1502 may include a hard disk drive (HDD), a floppy disk drive, flash memory, an optical disc, a magneto-optical disc, magnetic tape, a Universal Serial Bus (USB) drive, or a combination of two or more thereof. Where appropriate, the memory 1502 may include a removable or non-removable (or fixed) medium. Where appropriate, the memory 1502 may be located inside or outside an electronic device. In a specific embodiment, the memory 1502 is a non-volatile solid-state memory.

The memory 1502 may include a read-only memory (ROM), a flash memory device, a random access memory (RAM), a disc storage medium device, an optical storage medium device, or an electrical or optical or other physical/-tangible memory storage device. Therefore, generally, the memory 1502 includes one or more tangible (non-transitory) computer-readable storage media (for example, a memory device) in software form encoded with a computer-executable instruction. When executed (for example, by one or more processors), the software can perform the operations in any one of the methods disclosed in the above aspects of this application.

The processor 1501 implements any one of the power distribution methods in the above embodiments by reading and executing the computer program instruction stored in the memory 1502.

In an example, the electronic device may further include a communication interface 1503 and a bus 1510. As shown in FIG. 15, the processor 1501, the memory 1502, and the communication interface 1503 are connected by the bus 1510 and communicate with each other.

The communication interface 1503 is primarily used for implementing communication between various modules, apparatuses, units, and/or devices in some embodiments of this application.

The bus 1510 includes hardware, software, or both, and is configured to couple the components of the electronic device together. By way of example and not limitation, the bus may include an Accelerated Graphics Port (AGP) or other graphics bus, an Enhanced Industry Standard Architecture (EISA) bus, a Front Side Bus (FSB), a HyperTransport (HT) interconnect, an Industry Standard Architecture (ISA) bus, an InfiniBand interconnect, a Low Pin Count (LPC) bus, a memory bus, a Micro Channel Architecture (MCA) bus, a Peripheral Component Interconnect (PCI) bus, a PCI-Express (PCI-X) bus, a Serial Advanced Technology Attachment (SATA) bus, a Video Electronics Standards Association Local Bus (VLB), or other suitable buses, or a combination of two or more thereof. Where appropriate, the bus 1510 may include one or more buses. Although some embodiments of this application have described and illustrated specific buses, this application considers any suitable buses or interconnections.

The electronic device is based on the power distribution method, and therefore, implements the power distribution methods described with reference to FIG. 12 and FIG. 14.

In addition, with reference to the power distribution methods in the above embodiments, an embodiment of this application provides a computer storage medium for implementing the methods. The computer storage medium stores a computer program instruction. When executed by a processor, the computer program instruction implements any one of the power distribution methods in the above embodiments.

In addition, an embodiment of this application further provides a computer program product. The computer program product includes a computer program. When executed by a processor, the computer program implements the steps and corresponding content in any one of the foregoing method embodiments.

Understandably, the terms and expressions used herein are merely for ease of description, and one or more embodiments of this specification are not limited to such terms and expressions. The use of such terms and expressions is not intended to exclude any shown or described equivalent features (or a part thereof). It is hereby noted that various possible modifications are also included in the scope of the claims. Other modifications, changes, and substitutions are also possible. Accordingly, the claims are intended to cover all such equivalents.

## Claims

1. A power conversion system, comprising:

   a direct current bus (DC-BUS);
   a power conversion unit (10), electrically connected to the DC-BUS, wherein the power conversion unit is configured to be electrically connected to at least two of a direct current power source (20), a battery module (30), or an alternating current power source (40); and
   a control unit, electrically connected to the power conversion unit (10), **characterized in that** the control unit is configured to perform the following operations:

      outputting a first loop control signal or a second loop control signal to the power conversion unit (10); and/or,
      outputting a third loop control signal or a fourth loop control signal to the power conversion unit (10); and/or,
      outputting a fifth loop control signal or a sixth loop control signal to the power conversion unit (10), wherein, the first loop control signal is generated based on an output voltage (Upvfb) of the direct current power source (20) and a first threshold voltage (Upvref_1); the second loop control signal is generated based on a bus voltage (Ubus) of the DC-BUS and a second threshold voltage (Upvref_2); the third loop control signal is generated based on a charge current (Ibatfb_1) of the power conversion unit (10) and a first target current (Ibatref_1), or based on a discharge current (Ibatfb_2) of the power conversion unit (10) and a second target current (Ibatref_2); the fourth loop control signal is generated based on either a third threshold voltage (Ubatref_1) or a fourth threshold voltage (Ubatref_2) and the bus voltage (Ubus) of the DC-BUS; the fifth loop control signal is generated based on an extraction current (Igridfb_1) of the power conversion unit (10) and a third target current (Igridref_1), or based on the discharge current (Igridfb_2) of the power conversion unit (10) and a fourth target current (Igridref_2); and the sixth loop control signal is generated based on either a fifth threshold voltage (Uinvref_1) or a sixth threshold voltage (Upfcref_2) and the bus voltage (Ubus) of the DC-BUS.

2. The power conversion system according to claim 1, **characterized in that** the power conversion unit (10) comprises:

a first DC-DC converter (11), configured to be disposed between the direct current power source (20) and the DC-BUS, wherein the control unit is configured to output the first loop control signal or the second loop control signal to the first DC-DC converter (11);
and/or,
a second DC-DC converter (12), configured to be disposed between the battery module (30) and the DC-BUS, wherein the control unit is configured to output the third loop control signal or the fourth loop control signal to the second DC-DC converter (12);
and/or,
a DC-AC inverter (13), configured to be disposed between the alternating current power source (40) and the DC-BUS, wherein the control unit is configured to output the fifth loop control signal or the sixth loop control signal to the DC-AC inverter (13).

3. The power conversion system according to claim 2, **characterized in that** the first DC-DC converter (11) is a unidirectional DC-DC converter;

the control unit is configured to generate the first loop control signal (Upvout_1) based on a maximum power loop controller (G1s) and a difference value between the output voltage (Upvfb) of the direct current power source (20) and the first threshold voltage (Upvref_1) ; and the control unit is configured to generate the second loop control signal (Upvout_2) based on a first constant-voltage loop controller (G2s) and a difference value between the bus voltage (Ubus) of the DC-BUS and the second threshold voltage (Upvref_2),
wherein, the first threshold voltage (Upvref_1) is defined as a voltage corresponding to a maximum power point at which the first DC-DC converter operates, and the second threshold voltage (Upvref_2) is defined as a constant voltage setpoint corresponding to a constant voltage mode in which the first DC-DC converter operates; and the control unit is configured to select, from the first loop control signal (Upvout_1) and the second loop control signal (Upvout_2), the one with a smaller signal duty cycle, and output the selected signal to the first DC-DC converter (11).

4. The power conversion system according to claim 2 or 3, **characterized in that** the second DC-DC converter (12) is a unidirectional DC-DC converter or a bidirectional DC-DC converter;

the control unit is configured to: generate, in response to a condition that the second DC-DC converter (12) operates in a charging mode, the third loop control signal (Ibatout_1) based on a first constant-current loop controller (G3-1s) and a difference value between a charge current (Ibatfb_1) of the second DC-DC converter and the first target current (Ibatref_1), and generate the fourth loop control signal (Ubatout_1) based on a second constant-voltage loop controller (G4-1s) and a difference value between the bus voltage (Ubus) of the DC-BUS and the third threshold voltage (Ubatref_1) ,
wherein, the first target current (Ibatref_1) is defined as a constant current setpoint corresponding to a constant-current charging mode in which the second DC-DC converter operates, and the third threshold voltage (Ubatref_1) is defined as a constant voltage setpoint corresponding to a constant-voltage charging mode in which the second DC-DC converter operates;
and/or,
the control unit is configured to: generate, in response to a condition that the second DC-DC converter (12) operates in a discharging mode, the third loop control signal (Ibatout_2) based on a second constant-current loop controller (G3-2s) and a difference value between a discharge current (Ibatfb_2) of the second DC-DC converter and the second target current (Ibatref_2) , and generate the fourth loop control signal (Ubatout_2) based on a third constant-voltage loop controller (G4-2s) and a difference value between the bus voltage (Ubus) of the DC-BUS and the fourth threshold voltage (Ubatref_2),

wherein, the second target current (Ibatref_2) is defined as a constant current setpoint corresponding to a constant-current discharging mode in which the second DC-DC converter operates, and the fourth threshold voltage (Ubatref_2) is defined as a constant voltage setpoint corresponding to a constant-voltage discharging mode in which the second DC-DC converter operates; and

the control unit is further configured to select, from the third loop control signal and the fourth loop control signal, the one with a smaller signal duty cycle, and output the selected signal to the second DC-DC converter (12).

5.  The power conversion system according to any one of claims 2 to 4, **characterized in that** the DC-AC inverter (13) comprises a unidirectional DC-AC inverter or a bidirectional DC-AC inverter;

the unidirectional DC-AC inverter comprises an inverter circuit, and the bidirectional DC-AC inverter comprises an inverter circuit and a power factor correction circuit;

the control unit is configured to: generate, in response to a condition that the inverter circuit is in an operating state, the fifth loop control signal (Igridout_1) based on a third constant-current loop controller (G5-1s) and a difference value between an extraction current (Igridfb_1) of the inverter circuit and the third target current (Igridref_1) , and generate the sixth loop control signal (Ugridout_1) based on a fourth constant-voltage loop controller (G6-1s) and a difference value between the bus voltage (Ubus) of the DC-BUS and the fifth threshold voltage (Uinvref_1),

wherein, the third target current (Igridref_1) is defined as a constant current setpoint corresponding to a constant-current extraction mode in which the inverter circuit operates, and the fifth threshold voltage (Uinvref_1) is defined as a constant voltage setpoint corresponding to a constant-voltage extraction mode in which the inverter circuit operates;

and/or,

the control unit is configured to: generate, in response to a condition that the power factor correction circuit is in an operating state, the fifth loop control signal (Igridout_2) based on a fourth constant-current loop controller (G5-2s) and a difference value between a discharge current (Igridfb_2) of the power factor correction circuit and the fourth target current (Igridref_2), and generate the sixth loop control signal (Ugridout_2) based on a fifth constant-voltage loop controller (G6-2s) and a difference value between the bus voltage (Ubus) of the DC-BUS and the sixth threshold voltage (Upfcref_2),

wherein, the fourth target current (Igridref_2) is defined as a constant current setpoint corresponding to a constant-current discharging mode in which the power factor correction circuit operates, and the sixth threshold voltage (Upfcref_2) is defined as a constant voltage setpoint corresponding to a constant-voltage discharging mode in which the power factor correction circuit operates; and

the control unit is further configured to select, from the fifth loop control signal and the sixth loop control signal, the one with a smaller signal duty cycle, and output the selected signal to the inverter circuit or the power factor correction circuit.

6.  The power conversion system according to claim 5, **characterized in that** a relationship between the second threshold voltage (Upvref_2), the third threshold voltage (Ubatref_1), the fourth threshold voltage (Ubatref_2), the fifth threshold voltage (Uinvref_1), and the sixth threshold voltage (Upfcref_2) is:

$$Upvref\_2 > Ubatref\_2 > Uinvref\_1 = Upfcref\_2 > Ubatref\_1;$$

or

$$Upvref\_2 > Ubatref\_2 > Ubatref\_1 > Uinvref\_1 = Upfcref\_2.$$

7.  The power conversion system according to any one of claims 1 to 6, **characterized in that** the direct current power source (20) is configured to be a photovoltaic unit, and the alternating current power source (40) is configured to be a mains supply.

8.  A power distribution method, applied to the power conversion system according to any one of claims 1 to 7, the power distribution method comprising:

acquiring the output voltage (Upvfb) of the direct current power source (20) and the bus voltage (Ubus) of the DC-BUS;

calculating a first voltage difference between the first threshold voltage (Upvref_1) of the direct current power source (20) and the output voltage (Upvfb) of the direct current power source, and a second voltage difference between the second threshold voltage (Upvref_2) and the bus voltage (Ubus);

calculating the first loop control signal (Upvout_1) corresponding to the first voltage difference based on a control algorithm of a maximum power loop controller (G1s); and calculating the second loop control signal (Upvout_2) corresponding to the second voltage difference based on a control algorithm of a first constant-voltage loop controller (G2s); and

comparing a signal duty cycle of the first loop control signal (Upvout_1) and that of the second loop control signal (Upvout_2), and selecting, from the first loop control signal (Upvout_1) and the second loop control signal (Upvout_2), the one with a smaller signal duty cycle, and outputting the selected signal to the power conversion unit (10).

9. A power distribution method, applied to the power conversion system according to any one of claims 2 to 7, the power distribution method comprising:

acquiring a charge current (Ibatfb_1) or a discharge current (Ibatfb_2) of the battery module and the bus voltage (Ubus) of the DC-BUS;

calculating, based on the charge current (Ibatfb_1) or the discharge current (Ibatfb_2) of the battery module, a current difference value corresponding to a constant current mode in which the second DC-DC converter operates; and calculating, based on the bus voltage (Ubus), a voltage difference value corresponding to a constant voltage mode in which the second DC-DC converter operates;

calculating, based on a control algorithm corresponding to the constant current mode in which the second DC-DC converter operates, a third loop control signal corresponding to the current difference value; and calculating, based on a control algorithm corresponding to the constant voltage mode in which the second DC-DC converter operates, a fourth loop control signal corresponding to the voltage difference value; and

comparing a signal duty cycle of the third loop control signal and that of the fourth loop control signal, and selecting, from the third loop control signal and the fourth loop control signal, the one with a smaller signal duty cycle, and outputting the selected signal to the power conversion unit.

10. The power distribution method according to claim 9, **characterized in that** the calculating, based on the charge current (Ibatfb_1) or the discharge current (Ibatfb_2) of the battery module, a current difference value corresponding to a constant current mode in which the second DC-DC converter operates, comprises:

calculating, in response to a condition that the second DC-DC converter (12) operates in a charging mode, a first current difference between the charge current (Ibatfb_1) of the battery module and a first target current (Ibatref_1) corresponding to a constant-current charging mode in which the second DC-DC converter (12) operates; and/or,

calculating, in response to a condition that the second DC-DC converter (12) operates in a discharging mode, a second current difference between the discharge current (Ibatfb_2) of the battery module and a second target current (Ibatref_2) corresponding to a constant-current discharging mode in which the second DC-DC converter (12) operates;

the calculating, based on the bus voltage (Ubus), a voltage difference value corresponding to a constant voltage mode in which the second DC-DC converter operates, comprises:

calculating a third voltage difference between the third threshold voltage (Ubatref_1) and the bus voltage (Ubus) in response to a condition that the second DC-DC converter (12) operates in the charging mode; and/or,

calculating a fourth voltage difference between the fourth threshold voltage (Ubatref_2) and the bus voltage (Ubus) in response to a condition that the second DC-DC converter (12) operates in the discharging mode.

11. The power distribution method according to claim 9 or 10, **characterized in that** the calculating, based on a control algorithm corresponding to the constant current mode in which the second DC-DC converter operates, a third loop control signal corresponding to the current difference value, comprises:

calculating, in response to a condition that the second DC-DC converter (12) operates in a charging mode, a third loop control signal corresponding to the first current difference based on a control algorithm of a first constant-current loop controller (G3-1s);
and/or,
calculating, in response to a condition that the second DC-DC converter (12) operates in discharging mode, a third loop control signal corresponding to the second current difference based on a control algorithm of a second constant-current loop controller (G3-2s);
the calculating, based on a control algorithm corresponding to the constant voltage mode in which the second DC-DC converter operates, a fourth loop control signal corresponding to the voltage difference value, comprises:

> calculating, in response to a condition that the second DC-DC converter (12) operates in the charging mode, a fourth loop control signal corresponding to the third voltage difference based on a control algorithm of a second constant-voltage loop controller (G4-1s);
> and/or,
> calculating, in response to a condition that the second DC-DC converter (12) operates in the discharging mode, a fourth loop control signal corresponding to the fourth voltage difference based on a control algorithm of a third constant-voltage loop controller (G4-2s).

12. A power distribution method, applied to the power conversion system according to any one of claims 2 to 7, the power distribution method comprising:

> acquiring an extraction current (Igridfb_1) or a discharge current (Igridfb_2) of the alternating current power source (40) and the bus voltage (Ubus) of the DC-BUS;
> calculating, based on the extraction current (Igridfb_1) or the discharge current (Igridfb_2) of the alternating current power source (40), a current difference value corresponding to a constant current mode in which the DC-AC inverter operates; and calculating, based on the bus voltage (Ubus), a voltage difference value corresponding to a constant voltage mode in which the DC-AC inverter operates;
> calculating, based on a control algorithm corresponding to the constant current mode in which the DC-AC inverter operates, a fifth loop control signal corresponding to the current difference value; and calculating, based on a control algorithm corresponding to the constant voltage mode in which the DC-AC inverter operates, a sixth loop control signal corresponding to the voltage difference value; and
> comparing a signal duty cycle of the fifth loop control signal and that of the sixth loop control signal, and selecting, from the fifth loop control signal and the sixth loop control signal, the one with a smaller signal duty cycle, and outputting the selected signal to the power conversion unit.

13. The power distribution method according to claim 12, **characterized in that** the calculating, based on the extraction current (Igridfb_1) or the discharge current (Igridfb_2) of the alternating current power source (40), a current difference value corresponding to a constant current mode in which the DC-AC inverter operates, comprises:

> calculating, in response to a condition that an inverter circuit is in an operating state, a third current difference between the extraction current (Igridfb_1) of the alternating current power source (40) and the third target current (Igridref_1) corresponding to a constant-current extraction mode in which the inverter circuit operates;
> and/or,
> calculating, in response to a condition that a power factor correction circuit is in an operating state, a fourth current difference between the discharge current (Igridfb_2) of the alternating current power source (40) and the fourth target current (Igridref_2) corresponding to a constant-current discharging mode in which the inverter circuit operates;
> the calculating, based on the bus voltage (Ubus), a voltage difference value corresponding to a constant voltage mode in which the DC-AC inverter operates, comprises:

> calculating a fifth voltage difference between the fifth threshold voltage (Uinvref_1) and the bus voltage (Ubus) in response to a condition that the inverter circuit is in an operating state;
> and/or,
> calculating a sixth voltage difference between the sixth threshold voltage (Upfcref_2) and the bus voltage (Ubus) in response to a condition that the power factor correction circuit is in an operating state.

14. The power distribution method according to claim 12 or 13, **characterized in that** the calculating, based on a control algorithm corresponding to the constant current mode in which the DC-AC inverter operates, a fifth loop control signal corresponding to the current difference value, comprises:

calculating, in response to a condition that the inverter circuit is in an operating state, a fifth loop control signal corresponding to a third current difference based on a control algorithm of a third constant-current loop controller (G5-1s);

and/or,

calculating, in response to a condition that the power factor correction circuit is in an operating state, a fifth loop control signal corresponding to a fourth current difference based on a control algorithm of a fourth constant-current loop controller (G5-2s);

the calculating, based on a control algorithm corresponding to the constant voltage mode in which the DC-AC inverter operates, a sixth loop control signal corresponding to the voltage difference value, comprises:

calculating, in response to a condition that the inverter circuit is in an operating state, a sixth loop control signal corresponding to a fifth voltage difference based on a control algorithm of a fourth constant-voltage loop controller (G6-1s);

and/or,

calculating, in response to a condition that the power factor correction circuit is in an operating state, a sixth loop control signal corresponding to a sixth voltage difference based on a control algorithm of a fifth constant-voltage loop controller (G6-2s).

20

10

DC power
source

DC-BUS

40

AC power
source

30

Battery
module

Power conversion unit

50

Control unit

FIG. 1

20

10

DC power
source

DC-BUS

30

Battery
module

Power conversion unit

50

Control unit

FIG. 2

FIG. 3

FIG. 4

PV

| DC power source | — | First DC-DC converter `11` | — | DC-BUS | — | DC-AC inverter `13` | — | AC power source `40` |

`30` Battery module — Second DC-DC converter `12`

Control unit `50`

## FIG. 5

PV

| DC power source | — | First DC-DC converter `11` | — | DC-BUS | — | Inverter circuit `131` | — | Load `Load` |

`30` Battery module

Power factor correction circuit `132`

AC power source `40`

Second DC-DC converter `12`

Control unit `50`

## FIG. 6

FIG. 7

FIG. 8

FIG. 9

Igridref_1 $+$ $\bigotimes$ $-$ $I_{gridfb\_1}$ → $G_{5-1}(s)$ → Igridout_1 → MIN → PWM

Uinvref_1 $+$ $\bigotimes$ $-$ $U_{bus}$ → $G_{6-1}(s)$ → Ugridout_1

FIG. 10

Igridref_2 $+$ $\bigotimes$ $-$ $I_{gridfb\_2}$ → $G_{5-2}(s)$ → Igridout_2 → MIN → PWM

Upfcref_2 $+$ $\bigotimes$ $-$ $U_{bus}$ → $G_{6-2}(s)$ → Ugridout_2

FIG. 11

Acquire the output voltage of the direct current power source and the bus voltage of the DC-BUS — S110

Calculate a first voltage difference between the first threshold voltage of the direct current power source and the output voltage of the direct current power source, and a second voltage difference between the second threshold voltage and the bus voltage — S120

Calculate the first loop control signal corresponding to the first voltage difference based on a control algorithm of a maximum power loop controller; and calculate the second loop control signal corresponding to the second voltage difference based on a control algorithm of a first constant-voltage loop controller — S130

Compare a signal duty cycle of the first loop control signal and that of the second loop control signal, and select, from the first loop control signal and the second loop control signal, the one with a smaller signal duty cycle, and output the selected signal to the power conversion unit — S140

FIG. 12

| Acquire a charge current or a discharge current of the battery module and the bus voltage of the DC-BUS | S210 |

| Calculate, based on the charge current or the discharge current of the battery module, a current error value corresponding to a constant current mode in which the second DC-DC converter operates; and calculate, based on the bus voltage, a voltage error value corresponding to a constant voltage mode in which the second DC-DC converter operates | S220 |

| Calculate, based on a control algorithm corresponding to the constant current mode in which the second DC-DC converter operates, a third loop control signal corresponding to the current error value; and calculate, based on a control algorithm corresponding to the constant voltage mode in which the second DC-DC converter operates, a fourth loop control signal corresponding to the voltage error value | S230 |

| Compare a signal duty cycle of the third loop control signal and that of the fourth loop control signal, and select, from the third loop control signal and the fourth loop control signal, the one with a smaller signal duty cycle, and output the selected signal to the power conversion unit | S240 |

FIG. 13

Acquire an extraction current or a discharge current of an alternating current power source, and a bus voltage of a DC-BUS — S510

Calculate, based on the extraction current or the discharge current of the alternating current power source, a current error value corresponding to a constant current mode in which the DC-AC inverter operates; and calculate, based on the bus voltage, a voltage error value corresponding to a constant voltage mode in which the DC-AC inverter operates — S520

Calculate, based on a control algorithm corresponding to the constant current mode in which the DC-AC inverter operates, a fifth loop control signal corresponding to the current error value; and calculate, based on a control algorithm corresponding to the constant voltage mode in which the DC-AC inverter operates, a sixth loop control signal corresponding to the voltage error value — S530

Compare a signal duty cycle of the fifth loop control signal and that of the sixth loop control signal, and select, from the fifth loop control signal and the sixth loop control signal, the one with a smaller signal duty cycle, and output the selected signal to the power conversion unit — S540

FIG. 14

1501 Processor
1502 Memory
1503 Communication interface

Bus 710

FIG. 15

**EUROPEAN SEARCH REPORT**

Application Number

EP 25 20 4905

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 823 152 A1 (PANASONIC IP MAN CO LTD [JP]) 19 May 2021 (2021-05-19) | 1,2,7,8 | INV.<br>H02J1/102 |
| A | * abstract *<br>* figures *<br>* paragraph [0008] - paragraph [0028] *<br>* paragraph [0048] - paragraph [0075] * | 3-6,9-14 | H02J7/34<br>H02J7/94<br>H02J7/96<br><br>ADD. |
| A | US 2023/155380 A1 (RIKISO MASAHIRO [JP] ET AL) 18 May 2023 (2023-05-18)<br>* abstract *<br>* figures 1-5 *<br>* paragraph [0054] - paragraph [0086] * | 1-14 | H02J1/16<br>H02J3/32<br>H02J3/38<br>H02J7/02 |
| A | US 2023/035744 A1 (GAO JINFENG [CN] ET AL) 2 February 2023 (2023-02-02)<br>* abstract *<br>* figures 3-9,12,13 *<br>* paragraph [0115] - paragraph [0182] *<br>* paragraph [0254] - paragraph [0347] * | 1-14 | |
| A | US 2023/291222 A1 (MITSUNAGA TAKUMA [JP] ET AL) 14 September 2023 (2023-09-14)<br>* abstract *<br>* figures 2,5-7 *<br>* paragraph [0006] - paragraph [0014] *<br>* paragraph [0065] - paragraph [0072] * | 1-14 | TECHNICAL FIELDS SEARCHED (IPC)<br><br>H02J |
| A | US 2022/320866 A1 (JU HUALEI [CN] ET AL) 6 October 2022 (2022-10-06)<br>* abstract *<br>* figures *<br>* paragraph [0007] - paragraph [0168] * | 1-14 | |

The present search report has been drawn up for all claims

| Place of search | Date of completion of the search | Examiner |
|---|---|---|
| Munich | 5 February 2026 | Hurtado-Albir, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 4905

This annex lists the patent family members relating to the patent documents cited in  the above-mentioned European search report.
The members are as contained in the European Patent Office EDP file on
The European Patent Office is in no way liable for these particulars which are merely given for the purpose of information.

05-02-2026

| Patent document cited in search report | | Publication date | Patent family member(s) | | Publication date |
|---|---|---|---|---|---|
| EP 3823152 | A1 | 19-05-2021 | AU | 2019300646 A1 | 14-01-2021 |
| | | | EP | 3823152 A1 | 19-05-2021 |
| | | | JP | 7065289 B2 | 12-05-2022 |
| | | | JP | 2020014370 A | 23-01-2020 |
| US 2023155380 | A1 | 18-05-2023 | CN | 116097542 A | 09-05-2023 |
| | | | EP | 4195444 A1 | 14-06-2023 |
| | | | JP | 7630520 B2 | 17-02-2025 |
| | | | JP | WO2022030299 A1 | 10-02-2022 |
| | | | US | 2023155380 A1 | 18-05-2023 |
| | | | WO | 2022030299 A1 | 10-02-2022 |
| US 2023035744 | A1 | 02-02-2023 | CN | 115885447 A | 31-03-2023 |
| | | | EP | 4220885 A1 | 02-08-2023 |
| | | | ES | 2983802 T3 | 24-10-2024 |
| | | | HU | E067230 T2 | 28-10-2024 |
| | | | JP | 7374231 B2 | 06-11-2023 |
| | | | JP | 2023535099 A | 16-08-2023 |
| | | | KR | 20230019378 A | 08-02-2023 |
| | | | US | 2023035744 A1 | 02-02-2023 |
| | | | WO | 2023004716 A1 | 02-02-2023 |
| US 2023291222 | A1 | 14-09-2023 | JP | 2023131414 A | 22-09-2023 |
| | | | US | 2023291222 A1 | 14-09-2023 |
| US 2022320866 | A1 | 06-10-2022 | CN | 112952881 A | 11-06-2021 |
| | | | EP | 4068550 A1 | 05-10-2022 |
| | | | US | 2022320866 A1 | 06-10-2022 |

EPO FORM P0459

For more details about this annex : see Official Journal of the European Patent Office, No. 12/82